# EUROPEAN PATENT APPLICATION

(11) **EP 4 564 838 A1**
(43) Date of publication of application: **04.06.2025**
(21) Application number: 23845888.9
(22) Date of filing: 28.02.2023
(51) Int. Cl.: H04N 23/65, B60R 25/31, G03B 15/00, H04N 23/667, H04N 23/695

(54) **ON-VEHICLE MONITORING DEVICE, INFORMATION PROCESSING DEVICE, AND ON-VEHICLE MONITORING SYSTEM**

(30) Priority: 26.07.2022 JP 2022118660
(71) Applicant: Sony Semiconductor Solutions Corporation, Atsugi-shi, Kanagawa 243-0014 (JP)
(72) Inventor: HARA, Ikki, Atsugi-shi, Kanagawa 243-0014 (JP); SAKAMOTO, Junichi, Atsugi-shi, Kanagawa 243-0014 (JP); SUMIKURA, Shinya, Atsugi-shi, Kanagawa 243-0014 (JP); OZONE, Takayoshi, Atsugi-shi, Kanagawa 243-0014 (JP)
(74) Representative: Müller Hoffmann & Partner
(86) International application number: PCT/JP2023/007277
(87) International publication number: WO 2024/024148

(57) **Abstract**

An in-vehicle monitoring apparatus according to an embodiment includes: an imaging section (100) provided in a vehicle including a side mirror housing and configured to generate image data in accordance with imaging; and a control section (20) configured to control an imaging operation and an imaging direction of the imaging section. The control section controls the imaging direction of the imaging section in accordance with a state of the side mirror housing, and sets the imaging operation of the imaging section to a first power consumption mode in accordance with an ignition turn-off determination of the vehicle. The imaging section operates such that, when a motion of a surrounding object has been detected based on first image data generated in the first power consumption mode, the imaging operation is to be set to a second power consumption mode being a mode taking higher power consumption than the first power consumption mode.

## Description

### Field

The present disclosure relates to an in-vehicle monitoring apparatus, an information processing apparatus, and an in-vehicle monitoring system.

### Background

There is known an in-vehicle monitoring system that constantly monitors a surrounding situation using an image sensor in a vehicle parked at a place such as a parking lot. For example, the in-vehicle monitoring system constantly images front, rear, left, and right directions of the vehicle using a plurality of image sensors, analyzes or records the captured image by image processing or the like under the control of an Electronic Control Unit (ECU) mounted on the vehicle, and monitors the situation around the vehicle. Patent Literature 1 discloses a technology of using a camera mounted as an electronic mirror provided on the left and right of a vehicle to image the left and right directions of the vehicle.

### Citation List

### Patent Literature

Patent Literature 1: JP 2020-136715 A

### Summary

### Technical Problem

The conventional in-vehicle monitoring system allows the image sensor and the ECU to operate constantly even during parking similarly to the time during which the vehicle is traveling. This increases the power consumption and battery consumption, making it difficult to perform long-term parking monitoring.

An object of the present disclosure is to provide an in-vehicle monitoring apparatus, an information processing apparatus, and an in-vehicle monitoring system capable of suppressing power consumption in monitoring surrounding situations of a vehicle during parking.

### Solution to Problem

For solving the problem described above, an in-vehicle monitoring apparatus according to one aspect of the present disclosure has an imaging section provided in a vehicle including a side mirror housing and configured to generate image data in accordance with imaging; and a control section configured to control an imaging operation and an imaging direction of the imaging section, wherein the control section controls the imaging direction of the imaging section in accordance with a state of the side mirror housing, and sets the imaging operation of the imaging section to a first power consumption mode in accordance with an ignition turn-off determination of the vehicle, and the imaging section operates such that, when a motion of a surrounding object has been detected based on first image data generated in the first power consumption mode, the imaging operation is to be set to a second power consumption mode, the second power consumption mode taking higher power consumption than the first power consumption mode.

### Brief Description of Drawings

FIG. 1 is a block diagram schematically illustrating a configuration of an example of an in-vehicle monitoring system.
FIG. 2 is a schematic diagram for illustrating an operation of an in-vehicle monitoring system.
FIG. 3 is a block diagram illustrating a configuration example of a vehicle control system which is an example of a mobile apparatus control system applicable to each embodiment of the present disclosure.
FIG. 4 is a diagram illustrating an example of a sensing region covered by an external recognition sensor mounted on a vehicle, applicable to each embodiment of the present disclosure.
FIG. 5 is a block diagram schematically illustrating a configuration of an example of an in-vehicle monitoring apparatus according to a first embodiment.
FIG. 6 is a schematic diagram for illustrating low-resolution, medium-resolution, and high-resolution image data according to the first embodiment.
FIG. 7 is a schematic diagram for illustrating an operation of the in-vehicle monitoring apparatus according to the first embodiment.
FIG. 8 is a schematic diagram for illustrating each operation mode and its transition in the in-vehicle monitoring apparatus according to the first embodiment.
FIG. 9 is a block diagram illustrating a configuration of an example of an image sensor according to the first embodiment.
FIG. 10 is a perspective view schematically illustrating a structure of an example of the image sensor according to the first embodiment.
FIG. 11 is a block diagram illustrating more details of a configuration of an example of the imaging section applicable to the first embodiment.
FIG. 12 is a schematic diagram illustrating an example of a Bayer array.
FIG. 13 is a flowchart illustrating an example of parking monitoring processing according to the first embodiment.
FIG. 14 is a flowchart of an example illustrating image data recording processing according to the first embodiment.
FIG. 15 is a schematic diagram schematically illustrating a side mirror camera according to a known technology.
FIG. 16A is a schematic diagram illustrating an example of an imaging range and a captured image of a side mirror camera when the side mirror is unfolded according to the known technology.
FIG. 16B is a schematic diagram illustrating an example of an imaging range and a captured image of the side mirror camera when the side mirror is in the folded state according to the known technology.
FIG. 17 is a schematic view schematically illustrating a side mirror camera according to the first embodiment.
FIG. 18 is a schematic diagram for illustrating control of an imaging direction of the side mirror camera according to the first embodiment.
FIG. 19 is a block diagram illustrating a configuration of an example of a camera fixing tool driver that drives a camera fixing tool according to the first embodiment.
FIG. 20 is a flowchart illustrating an example of control of an imaging direction of the side mirror camera according to the first embodiment.
FIG. 21 is a block diagram illustrating a configuration of an example of a camera fixing tool driver that drives a camera fixing tool according to a first modification of the first embodiment.
FIG. 22 is a flowchart of an example illustrating control of an imaging direction of a side mirror camera according to the first modification of the first embodiment.
FIG. 23 is a schematic diagram illustrating a principle of a sensing method using IR light according to a second modification of the first embodiment.
FIG. 24 is a schematic diagram illustrating an example of an array of each color filter including an IR filter in a color filter section.
FIG. 25 is a schematic diagram illustrating an example of spectral characteristics of a sensor including: each color filter that transmits light in each wavelength region of each color of RGB; and an IR filter that transmits light in an IR wavelength region.
FIG. 26 is a schematic diagram illustrating an example of spectral characteristics of a dual-bandpass filter.
FIG. 27 is a block diagram illustrating a configuration of an example of an in-vehicle monitoring apparatus according to a third modification of the first embodiment.
FIG. 28 is a block diagram illustrating a configuration of an example of an in-vehicle monitoring apparatus according to a fourth modification of the first embodiment.
FIG. 29 is a schematic diagram for illustrating control of an imaging direction according to a second embodiment.
FIG. 30 is a schematic diagram for illustrating control of an imaging direction according to a third embodiment. Description of Embodiments

Embodiments of the present disclosure will be described below in detail with reference to the drawings. In each of the following embodiments, the same parts are denoted by the same reference symbols, and a repetitive description thereof will be omitted.

Hereinafter, embodiments of the present disclosure will be described in the following order.
1. Outline of technology according to present disclosure
2. Technology applicable to each embodiment of present disclosure
3. First embodiment of present disclosure
   3-1. Outline of imaging control according to first embodiment
   3-2. Configuration related to imaging control of first embodiment
   3-3. Processing related to imaging control of first embodiment
   3-4. Side mirror camera control according to first embodiment
      3-4-1. Configuration according to known technology
      3-4-2. Side mirror camera control according to first embodiment
   3-5. First modification of first embodiment
   3-6. Second modification of first embodiment
   3-7. Third modification of first embodiment
   3-8. Fourth modification of first embodiment
4. Second embodiment of present disclosure
5. Third embodiment of present disclosure
6. Other embodiments of present disclosure
7. Effects of embodiments and modifications of present disclosure

The present disclosure relates to an in-vehicle monitoring system that implements a parking monitoring function of monitoring situations around a parked vehicle based on image data captured by a camera mounted on the vehicle.

### (1. Outline of technology according to present disclosure)

In a parking monitoring mode of implementing a parking monitoring function, an in-vehicle monitoring system according to each embodiment of the present disclosure performs stepwise control of an imaging operation of a surround view camera mounted on a vehicle initially from an imaging operation mode with low power consumption toward an imaging operation mode with higher power consumption based on image data captured by the surround view camera.

More specifically, in the parking monitoring mode used by the in-vehicle monitoring system according to each embodiment of the present disclosure, the imaging operation by the surround view camera is first set to a first power consumption mode having low power consumption. In the first power consumption mode, the in-vehicle monitoring system according to each embodiment performs moving object detection based on image data captured by the surround view camera, thereby detecting a movement of a surrounding object being an object around the vehicle. When the movement of the surrounding object has been detected by the moving object detection, the in-vehicle monitoring system sets the imaging operation by the surround view camera to a second power consumption mode being a mode using power consumption greater than the first power consumption mode. In the second power consumption mode, the in-vehicle monitoring system performs human detection based on image data captured by the surround view camera, thereby detecting a human around the vehicle.

When a human has been detected by human detection, the in-vehicle monitoring system sets the imaging operation by the surround view camera to a third power consumption mode being a mode using power consumption greater than the second power consumption mode. In the third power consumption mode, the in-vehicle monitoring system records image data captured by the surround view camera in a recording medium.

In this manner, the in-vehicle monitoring system according to each embodiment of the present disclosure performs stepwise control of the imaging operation mode used by the surround view camera initially from the low power consumption mode toward the higher power consumption mode based on image data, making it possible to suppress power consumption of the device, leading to achievement of parking monitoring for a longer time.

In addition, the in-vehicle monitoring system according to each embodiment of the present disclosure controls the imaging direction of the side mirror camera mounted on the side mirror among the surround view cameras so as to be a constant direction regardless of the state of the side mirror. More specifically, the in-vehicle monitoring system controls the imaging direction of the side mirror camera such that an imaging direction in a folded mode in which the side mirror is in a folded state is to be controlled to maintain an imaging direction in an unfolded mode in which the side mirror is unfolded indicating a normal use state.

In this manner, the in-vehicle monitoring system according to each embodiment of the present disclosure controls the imaging direction of the side mirror camera to be constant regardless of the state of the side mirror, making it possible to suppress occurrence of a blind spot for the side mirror camera when the vehicle is parked. Therefore, with the in-vehicle monitoring system according to each embodiment of the present disclosure, it is possible to achieve parking monitoring at 360° around the vehicle even when the side mirror is in the folded state during parking.

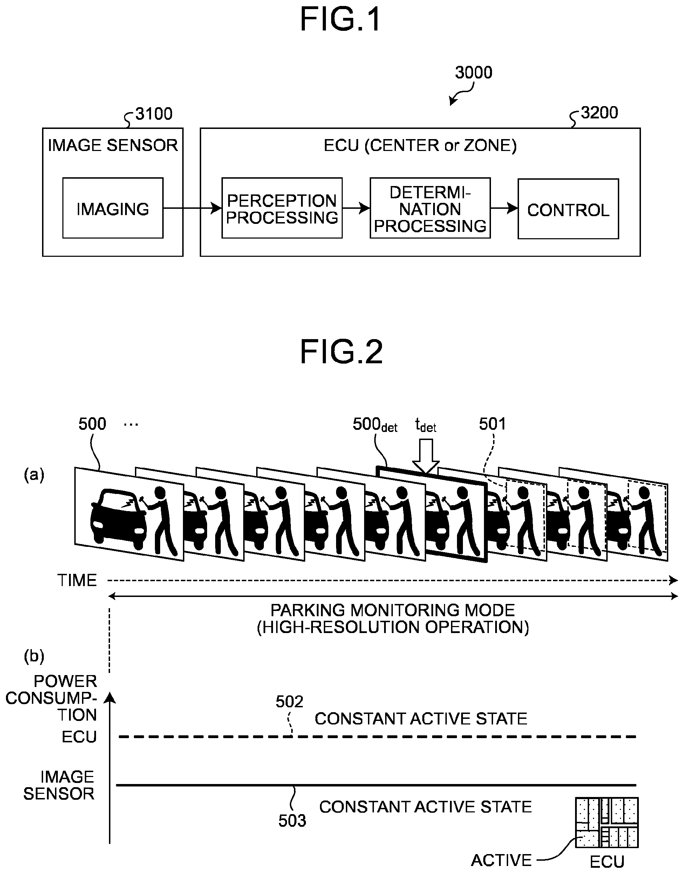

FIG. 1 is a block diagram schematically illustrating a configuration of an example of an in-vehicle monitoring system.

In FIG. 1, an in-vehicle monitoring system 3000 includes an image sensor 3100 mounted on a vehicle and some functions of Electronic Control Unit (ECU) 3200. The image sensor 3100 includes an imaging element and a drive circuit that drives the imaging element, and outputs image data acquired by imaging. The ECU 3200 may control the entire vehicle (center) or may control a part of the vehicle (zone). The ECU 3200 may include a versatile processor such as a Central Processing Unit (CPU) or a processor specialized for image processing such as an Image Signal Processor (ISP).

Imaging is performed by the image sensor 3100, and the captured image data is transferred to the ECU 3200. The ECU 3200 performs perception processing based on the image data transferred from the image sensor 3100, and perceives a moving object or a human included in the image data. The ECU 3200 may further perform processing on the image data, such as segmentation analysis and face recognition processing, as the perception processing. The ECU 3200 executes determination processing on the result of the perception processing, and performs predetermined control in accordance with the determination result. For example, when it is determined that an unregistered human approaches while the vehicle is parked, the ECU 3200 may transmit an alarm to a terminal device or the like of a user of the vehicle.

FIG. 2 is a schematic diagram for illustrating an operation of the in-vehicle monitoring system 3000. As illustrated in section (a) of FIG. 2, the in-vehicle monitoring system 3000 performs imaging in the parking monitoring mode using the image sensor 3100. The image sensor 3100 outputs, in units of frames, image data 500 acquired by the imaging. In the in-vehicle monitoring system 3000, the ECU 3200 is assumed to have sensed a moving object in image data 500_{det} output at time t_{det}. For example, the ECU 3200 may execute perception processing or the like by focusing on a region 501 in which the moving object has been detected in the image data 500, starting from the image data 500 of the frame next to the image data 500_{det} in which the moving object has been sensed.

In the parking monitoring mode, the in-vehicle monitoring system 3000 allows the image sensor 3100 to perform high-resolution operation to acquire high-resolution image data as a captured image. The high-resolution operation is, for example, an operation of forming the image data 500 by each pixel data acquired by all the pixels in an effective pixel region in the imaging element including a plurality of pixels.

In FIG. 2, section (b) schematically illustrates an example of power consumption of the image sensor 3100 and the ECU 3200. In the section (b) of FIG. 2, the horizontal axis represents time corresponding to the section (a) of the diagram, and the vertical axis represents power consumption. Note that, in section (b) of FIG. 2, the magnitude relationship between the power consumption of the ECU 3200 and the power consumption of the image sensor 3100 is not limited to this example. The ECU 3200 and the image sensor 3100 are each in a constant active state during the period of the parking monitoring mode, and the power consumption is substantially constant during the period of the parking monitoring mode as indicated by characteristic lines 502 and 503.

In this manner, the in-vehicle monitoring system 3000 allows the image sensor 3100 and the ECU 3200 to perform constant operation, which increases power consumption and battery consumption, making it difficult to implement long-term parking monitoring in some cases.

Parking monitoring includes a case of constant recording for constant monitoring, and a case of triggered recording, which is triggered by moving object sensing or the like for suppressing power consumption and storage capacity consumption. However, the case of recording triggered by moving object sensing or the like has a possibility of frequent occurrence of unnecessary recordings, making it difficult to achieve suppression of power consumption in some cases. Furthermore, frequent recordings would cause a problem on the user that it takes time and effort to confirm what has been recorded.

### (2. Technology applicable to each embodiment of present disclosure)

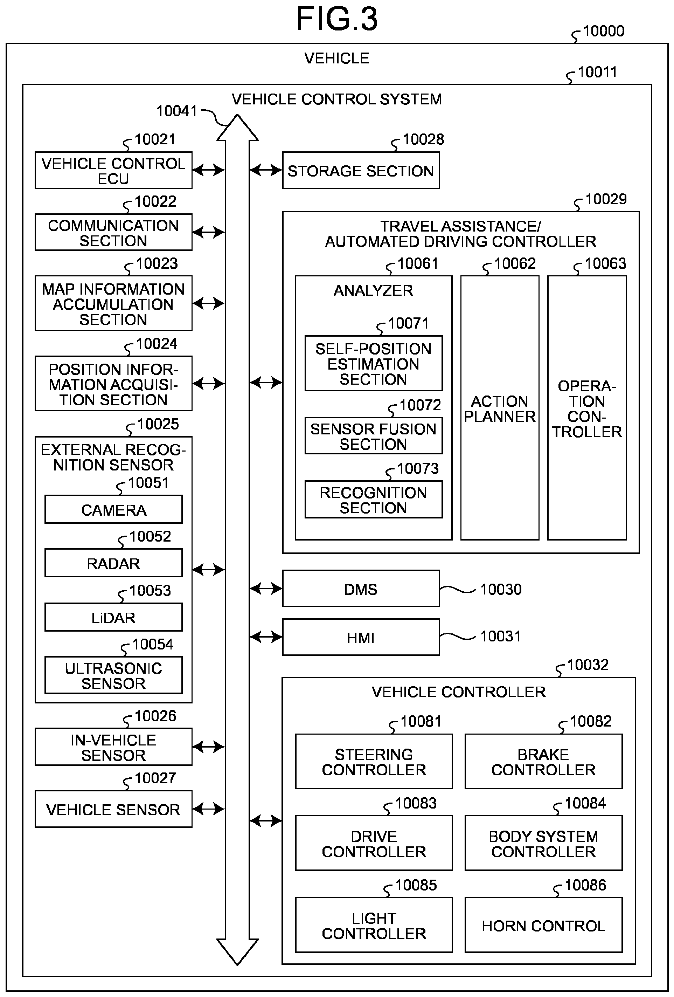

Next, a technology applicable to each embodiment of the present disclosure will be described. FIG. 3 is a block diagram illustrating a configuration example of a vehicle control system 10011 which is an example of a mobile apparatus control system applicable to each embodiment of the present disclosure.

The vehicle control system 10011 is installed in a vehicle 10000 and performs processing related to travel assistance, automated driving, and parking monitoring regarding the vehicle 10000.

The vehicle control system 10011 includes a vehicle control ECU 10021, a communication section 10022, a map information accumulation section 10023, a position information acquisition section 10024, an external recognition sensor 10025, an in-vehicle sensor 10026, a vehicle sensor 10027, a storage section 10028, a travel assistance/automated driving controller 10029, a Driver Monitoring System (DMS) 10030, a Human Machine Interface (HMI) 10031, and a vehicle controller 10032.

The vehicle control ECU 10021, the communication section 10022, the map information accumulation section 10023, the position information acquisition section 10024, the external recognition sensor 10025, the in-vehicle sensor 10026, the vehicle sensor 10027, the storage section 10028, the travel assistance/automated driving controller 10029, the driver monitoring system (DMS) 10030, the human machine interface (HMI) 10031, and the vehicle controller 10032 are communicably connected to each other via a communication network 10041.

The communication network 10041 includes, for example, an in-vehicle communication network, a bus, or the like conforming to a digital bidirectional communication standard such as a Controller Area Network (CAN), a Local Interconnect Network (LIN), a Local Area Network (LAN), FlexRay (registered trademark), and Ethernet (registered trademark). The communication network 10041 may be selectively used depending on the type of data to be transmitted. For example, it is allowable to apply CAN to data related to vehicle control, and apply Ethernet to large-capacity data. Individual portions of the vehicle control system 10011 may be directly connected to each other without intervening the communication network 10041, for example, by using wireless communication that assumes communication at a relatively short distance, such as Near Field Communication (NFC) or Bluetooth (registered trademark).

Note that, hereinafter, in a case where individual portions of the vehicle control system 10011 performs communication via the communication network 10041, description of the communication network 10041 will be omitted. For example, when the vehicle control ECU 10021 and the communication section 10022 communicate with each other via the communication network 10041, it is simply described that the vehicle control ECU 10021 and the communication section 10022 communicate with each other.

The vehicle control ECU 10021 includes various processors such as a Central Processing Unit (CPU) and a Micro Processing Unit (MPU), for example. The vehicle control ECU 10021 may include an ISP. The vehicle control ECU 10021 controls the entire or partial function of the vehicle control system 10011. Furthermore, the vehicle control system 10011 may include a plurality of ECUs.

The communication section 10022 communicates with various devices inside and outside the vehicle, other vehicles, servers, base stations, and the like, and transmits and receives various data. At this time, the communication section 10022 can perform communication using a plurality of communication schemes.

Communication with the outside of the vehicle executable by the communication section 10022 will be schematically described. The communication section 10022 communicates with a server or the like existing on an external network (hereinafter, referred to as an external server) via a base station or an access point by a wireless communication scheme such as 5th generation (5G) mobile communication system), Long Term Evolution (LTE), or Dedicated Short Range Communications (DSRC). Examples of the external network with which the communication section 10022 performs communication include the Internet, a cloud network, and a network unique to an organization. The communication scheme by which the communication section 10022 communicates with an external network is not particularly limited as long as it is a wireless communication scheme capable of performing digital bidirectional communication at a predetermined communication speed or more and at a predetermined distance or more.

Furthermore, for example, the communication section 10022 can communicate with a terminal existing in the vicinity of a host vehicle using a Peer to Peer (P2P) technology. Examples of the terminal present in the vicinity of the host vehicle include a terminal worn by a mobile object moving at a relatively low speed such as a pedestrian or a bicycle, a terminal installed at a fixed position such as a store, or a Machine Type Communication (MTC) terminal. Furthermore, the communication section 10022 can also perform V2X communication. The V2X communication refers to, for example, communication between the host vehicle and another vehicle, such as Vehicle to Vehicle communication with another vehicle, Vehicle to Infrastructure communication with a roadside device or the like, Vehicle to Home communication, and Vehicle to Pedestrian communication with a terminal or the like possessed by a pedestrian.

For example, the communication section 10022 can receive, from the outside (Over The Air), a program for updating software that controls the operation of the vehicle control system 10011. The communication section 10022 can further receive map information, traffic information, information around the vehicle 10000, and the like from the outside. Furthermore, for example, the communication section 10022 can transmit information such as information related to the vehicle 10000 and information around the vehicle 10000 to the outside. Examples of the information related to the vehicle 10000 transmitted to the outside by the communication section 10022 include information such as data indicating the state of the vehicle 10000 and a recognition result obtained by a recognition section 10073. Furthermore, for example, the communication section 10022 performs communication corresponding to a vehicle emergency call system such as an e-Call.

For example, the communication section 10022 receives an electromagnetic wave transmitted by a road traffic information communication system (Vehicle Information and Communication System (VICS) (registered trademark), such as a radio wave beacon, an optical beacon, or FM multiplex broadcasting.

Communication with the inside of the vehicle executable by the communication section 10022 will be schematically described. The communication section 10022 can communicate with each device in the vehicle using wireless communication, for example. The communication section 10022 can perform wireless communication with an in-vehicle device by a communication scheme capable of performing digital bidirectional communication at a predetermined communication speed or more by wireless communication, such as wireless LAN, Bluetooth, NFC, or wireless USB (WUSB). Communication method is not limited thereto, and the communication section 10022 can also communicate with each device in the vehicle using wired communication. For example, the communication section 10022 can communicate with each device in the vehicle by wired communication via a cable connected to a connection terminal (not illustrated). The communication section 10022 can communicate with each device in the vehicle by a communication scheme capable of performing digital bidirectional communication at a predetermined communication speed or more by wired communication, such as Universal Serial Bus (USB), High-Definition Multimedia Interface (HDMI) (registered trademark), or Mobile High-definition Link (MHL).

Here, the in-vehicle device refers to a device existing in the vehicle and not connected to the communication network 10041, for example. Assumable examples of the in-vehicle device include a mobile device or a wearable device carried by an occupant such as a driver, an information device brought into the vehicle for temporary installation.

The map information accumulation section 10023 accumulates one or both of a map acquired from the outside and a map created by the vehicle 10000. For example, the map information accumulation section 10023 accumulates maps such as a three-dimensional high-precision map and a global map having lower precision than the high-precision map and covering a wide area.

Examples of the high-precision map include a dynamic map, a point cloud map, and a vector map. The dynamic map is a map including four layers of dynamic information, semi-dynamic information, semi-static information, and static information, and is provided to the vehicle 10000 from an external server or the like. The point cloud map is a map including point clouds (point cloud data). The vector map is, for example, a map in which traffic information such as a lane and a position of a traffic light is associated with a point cloud map and adapted to an Advanced Driver Assistance System (ADAS) or Autonomous Driving (AD).

The point cloud map and the vector map may be provided from, for example, an external server or the like, or may be created by the vehicle 10000 as a map for performing matching with a local map to be described below based on a sensing result by a camera 10051, a radar 10052, a Laser Imaging Detection And Ranging (LiDAR) 10053, or the like, and may be accumulated in the map information accumulation section 10023. In a case where a high-precision map is provided from an external server or the like, for example, map data of several hundred meters square regarding a planned path of the vehicle 10000 for future travel is acquired from the external server or the like in order to reduce the communication traffic.

The position information acquisition section 10024 receives a Global Navigation Satellite System (GNSS) signal from a GNSS satellite and acquires position information of the vehicle 10000. The acquired position information is supplied to the travel assistance/automated driving controller 10029. Note that the position information acquisition section 10024 may acquire the position information using a beacon, for example, not limited to the method using the GNSS signal.

The external recognition sensor 10025 includes various sensors used for recognizing a situation outside the vehicle 10000, and supplies sensor data from the individual sensors to individual portions of the vehicle control system 10011. The type and number of sensors included in the external recognition sensor 10025 can be optionally determined.

For example, the external recognition sensor 10025 includes a camera 10051, a radar 10052, a LiDAR 10053, and an ultrasonic sensor 10054. The configuration is not limited thereto, and the external recognition sensor 10025 may be configured to include one or more types of sensors among the camera 10051, the radar 10052, the LiDAR 10053, and the ultrasonic sensor 10054. The numbers of the cameras 10051, the radars 10052, the LiDAR 10053, and the ultrasonic sensors 10054 are not particularly limited as long as they can be practically installed in the vehicle 10000. Furthermore, the type of sensor included in the external recognition sensor 10025 is not limited to this example, and the external recognition sensor 10025 may include other types of sensors. An example of the sensing region of each sensor included in the external recognition sensor 10025 will be described below.

Note that an image shooting scheme of the camera 10051 is not particularly limited. For example, cameras of various types of image shooting schemes, being image shooting schemes capable of distance measurement, such as a Time of Flight (ToF) camera, a stereo camera, a monocular camera, and an infrared camera, are applicable to the camera 10051 as necessary. The type of the camera is not limited thereto, and the camera 10051 may be a device that simply acquires a shot image regardless of distance measurement.

The camera 10051 is mounted in plurality on the vehicle 10000. For example, at least one camera 10051 may be provided on each position, namely, a front portion, a rear portion, a left side surface, and a right side surface of the vehicle 10000 so as to be able to acquire 360° surrounding images of the vehicle 10000. In this case, on the left side surface and the right side surface, the cameras 10051 may be provided on the side mirrors on the individual sides.

Furthermore, for example, the external recognition sensor 10025 can include an environmental sensor for detecting the environment for the vehicle 10000. The environmental sensor is a sensor for detecting an environment such as weather, atmospheric phenomena, and brightness, and can include various sensors such as a raindrop sensor, a fog sensor, a daylight sensor, a snow sensor, and an illuminance sensor.

Furthermore, for example, the external recognition sensor 10025 includes a microphone used for detecting a sound around the vehicle 10000, the position of a sound source, and the like.

The in-vehicle sensor 10026 includes various sensors for detecting information inside the vehicle, and supplies sensor data from each sensor to individual portions of the vehicle control system 10011. The types and the number of various sensors included in the in-vehicle sensor 10026 are not particularly limited as long as they are the types and numbers practically installable in the vehicle 10000.

For example, the in-vehicle sensor 10026 can include one or more types of sensors out of a camera, a radar, a seating sensor, a steering wheel sensor, a microphone, and a biometric sensor.

The camera included in the in-vehicle sensor 10026 can be, for example, cameras of various image shooting schemes capable of measuring a distance, such as a ToF camera, a stereo camera, a monocular camera, and an infrared camera. The type of the camera included in the in-vehicle sensor 10026 is not limited thereto, and the camera may be a device that simply acquires a shot image regardless of distance measurement. Hereinafter, the camera included in the in-vehicle sensor 10026 is appropriately referred to as an in-vehicle camera. The in-vehicle camera may change its imaging direction in accordance with the control of the vehicle control ECU 10021, for example.

The biometric sensor included in the in-vehicle sensor 10026 is installed at positions such as a seat and a steering wheel to detect various types of biometric information of the occupant such as the driver.

The vehicle sensor 10027 includes various sensors for detecting the state of the vehicle 10000, and supplies sensor data from each sensor to individual portions of the vehicle control system 10011. The types and the number of various sensors included in the vehicle sensor 10027 are not particularly limited as long as they can be practically installed in the vehicle 10000.

For example, the vehicle sensor 10027 includes a speed sensor, an acceleration sensor, an angular velocity sensor (gyro sensor), and an Inertial Measurement Unit (IMU) integrating these sensors. For example, the vehicle sensor 10027 includes a steering angle sensor that detects a steering angle of a steering wheel, a yaw rate sensor, an accelerator sensor that detects an operation amount of an accelerator pedal, and a brake sensor that detects an operation amount of a brake pedal. For example, the vehicle sensor 10027 includes a rotation sensor that detects the rotation speed of the engine or the motor, an air pressure sensor that detects the air pressure of the tire, a slip rate sensor that detects the slip rate of the tire, and a wheel speed sensor that detects the rotation speed of the wheel. For example, the vehicle sensor 10027 includes a battery sensor that detects the remaining amount and temperature of the battery, and an impact sensor that detects an external impact.

The storage section 10028 includes at least either one of a nonvolatile storage medium or a volatile storage medium, and stores data and a program. The storage section 10028 can be used as Electrically Erasable Programmable Read Only Memory (EEPROM) and Random Access Memory (RAM), and applicable storage media include a magnetic storage device such as a Hard Disc Drive (HDD), a semiconductor storage device such as flash memory, an optical storage device, and a magneto-optical device. The storage section 10028 stores various programs, data, and the like used by individual portions of the vehicle control system 10011. For example, the storage section 10028 includes Event Data Recorder (EDR) and a Data Storage System for Automated Driving (DSSAD), and stores information regarding the vehicle 10000 before and after an event such as an accident and information acquired by the in-vehicle sensor 10026.

The travel assistance/automated driving controller 10029 controls travel assistance and automated driving of the vehicle 10000. For example, the travel assistance/automated driving controller 10029 includes an analyzer 10061, an action planner 10062, and an operation controller 10063.

The analyzer 10061 performs analysis processing of the situation of the vehicle 10000 and the surroundings. The analyzer 10061 includes a self-position estimation section 10071, a sensor fusion section 10072, and a recognition section 10073.

The self-position estimation section 10071 estimates the self-position of the vehicle 10000 based on the sensor data from the external recognition sensor 10025 and the high-precision map accumulated in the map information accumulation section 10023. For example, the self-position estimation section 10071 generates a local map based on the sensor data from the external recognition sensor 10025, and estimates the self-position of the vehicle 10000 by matching the local map with the high-precision map. The position of the vehicle 10000 is based on the center of the axle of the rear wheel pair, for example.

Examples of the local map include a three-dimensional high-precision map and an Occupancy Grid Map created using a technology such as Simultaneous Localization and Mapping (SLAM). Examples of the three-dimensional high-precision map include the above-described point cloud map. The occupancy grid map is a map in which a three-dimensional or two-dimensional space around the vehicle 10000 is divided into grids (lattice) of a predetermined size, and an occupancy state of an object is indicated in units of grids. The occupancy state of the object is indicated by, for example, the presence or absence or existence probability of the object. The local map is also used for detection processing and recognition processing of a situation outside the vehicle 10000 performed by the recognition section 10073, for example.

The self-position estimation section 10071 may estimate the self-position of the vehicle 10000 based on the position information acquired by the position information acquisition section 10024 and the sensor data from the vehicle sensor 10027.

The sensor fusion section 10072 performs sensor fusion processing of combining a plurality of different types of sensor data (for example, image data supplied from the camera 10051 and sensor data supplied from the radar 10052) to obtain new information. Methods of combining different types of sensor data include integration, merging, association, and the like.

The recognition section 10073 executes detection processing of detecting a situation outside the vehicle 10000 and recognition processing of recognizing a situation outside the vehicle 10000.

For example, the recognition section 10073 performs detection processing and recognition processing of a situation outside the vehicle 10000 based on information such as information from the external recognition sensor 10025, information from the self-position estimation section 10071, and information from the sensor fusion section 10072.

Specifically, for example, the recognition section 10073 performs detection processing, recognition processing, and the like of an object around the vehicle 10000. The object detection processing is, for example, processing of detecting the presence or absence, size, shape, position, motion, and the like of an object. The object recognition processing is processing of recognizing an attribute such as a type of an object or identifying a specific object, for example. However, the detection processing and the recognition processing are not necessarily clearly divided, and may overlap each other.

For example, the recognition section 10073 performs clustering of grouping point clouds based on sensor data from the radar 10052, the LiDAR 10053, or the like into clusters of point clouds, thereby detecting an object around the vehicle 10000. With this operation, the presence or absence, size, shape, and position of an object around the vehicle 10000 are detected.

For example, the recognition section 10073 performs tracking being a follow-up operation to the motion of the cluster of the point cloud grouped by clustering, thereby detecting the motion of the object around the vehicle 10000. With this operation, the speed and the traveling direction (movement vector) of the object around the vehicle 10000 are detected.

For example, the recognition section 10073 detects or recognizes a vehicle, a human, a bicycle, an obstacle, a structure, a road, a traffic light, a traffic sign, a road sign, and the like based on the image data supplied from the camera 10051. The recognition section 10073 may recognize the type of the object around the vehicle 10000 by performing recognition processing such as semantic segmentation.

For example, the recognition section 10073 can perform recognition processing of traffic rules around the vehicle 10000 based on a map accumulated in the map information accumulation section 10023, self-position estimation results from the self-position estimation section 10071, and a recognition result of an object around the vehicle 10000 obtained by the recognition section 10073. With this processing, the recognition section 10073 can recognize information such as the position and the state of the traffic control signal, details of the traffic sign and the road marking, details of the traffic regulation, and the travelable lane.

For example, the recognition section 10073 can perform recognition processing of a surrounding environment of the vehicle 10000. Assumable examples of the surrounding environment to be recognized by the recognition section 10073 include weather, temperature, humidity, brightness, and a state of a road surface.

The action planner 10062 creates an action plan of the vehicle 10000. For example, the action planner 10062 creates an action plan by performing processing of path planning and path tracking.

The path planning (also referred to as Global path planning) is a process of planning a rough path from the start to the goal. This path planning is also referred to as a track planning, and includes processing of track generation (referred to as Local path planning) that enables safe and smooth traveling in the vicinity of the vehicle 10000 in consideration of the motion characteristics of the vehicle 10000 along the planned path.

Path follow-up is a process of planning an operation for safely and accurately traveling a path planned by the path planning within a planned time. For example, the action planner 10062 can calculate a target speed and target angular velocity of the vehicle 10000 based on the result of the path follow-up process.

The operation controller 10063 controls the operation of the vehicle 10000 in order to implement the action plan created by the action planner 10062.

For example, the operation controller 10063 controls a steering controller 10081, a brake controller 10082, and a drive controller 10083 included in the vehicle controller 10032 to be described below, and performs acceleration/deceleration control and direction control to allow the vehicle 10000 to travel on the track calculated by the track planning. For example, the operation controller 10063 performs cooperative control for the purpose of implementing the ADAS functions such as collision avoidance or impact mitigation, follow-up traveling, traveling under cruise control, collision warning of the host vehicle, and lane departure warning of the host vehicle. For example, the operation controller 10063 performs cooperative control for the purpose of automated driving or the like in which the vehicle autonomously travels without depending on the operation of the driver.

The DMS 10030 performs processing such as authentication processing of the driver and recognition processing of the state of the driver based on data such as sensor data from the in-vehicle sensor 10026 and input data input to the HMI 10031 to be described below. In this case, assumable examples of the state of the driver as a recognition target include physical conditions, a wakefulness level, a concentration level, a fatigue level, a line-of-sight direction, a drunkenness level, a driving operation, and a posture.

Note that the DMS 10030 may perform authentication processing of an occupant other than the driver and recognition processing of the state of the occupant. Furthermore, for example, the DMS 10030 may perform recognition processing of the situation inside the vehicle based on sensor data from the in-vehicle sensor 10026. Assumable examples of the situation inside the vehicle to be recognized include temperature, humidity, brightness, and odor.

The HMI 10031 inputs various data, instructions, and the like, and presents various data to the driver or the like.

Data input performed by the HMI 10031 will be schematically described. The HMI 10031 includes an input device for a human to input data. The HMI 10031 generates an input signal based on data, an instruction, or the like input by an input device, and supplies the input signal to individual portions of the vehicle control system 10011. Examples of the input device provided in the HMI 10031 include an operating element such as a touch panel, a button, a switch, and a lever. Other than these, the HMI 10031 may further include an input device capable of inputting information by a method other than manual operation, such as by voice or gesture. Furthermore, the HMI 10031 may use, as the input device, a remote control device using infrared rays or radio waves, or an external connection device such as a mobile device or a wearable device corresponding to the operation of the vehicle control system 10011, for example.

Presentation of data by the HMI 10031 will be schematically described. The HMI 10031 generates visual information, auditory information, and tactile information for the occupant or the outside of the vehicle. In addition, the HMI 10031 performs output control that controls the output of each piece of generated information, details of the output, output timing, output method, and the like. The HMI 10031 generates and outputs, as the visual information, information indicated by images or light, such as an operation screen, a state display of the vehicle 10000, a warning display, and a monitor image indicating a situation around the vehicle 10000. In addition, the HMI 10031 generates and outputs, as the auditory information, information indicated by sounds such as voice guidance, a warning sound, and a warning message, for example. Further, the HMI 10031 generates and outputs, as the tactile information, information given to the tactile sense of the occupant, such as force, vibration, motion, for example.

Applicable examples of the output device on which the HMI 10031 outputs visual information include a display device that presents visual information by displaying an image on itself or a projector device that presents visual information based on a projected image. The display device may be a device that displays visual information in the field of view of the occupant, such as a head-up display, a transmissive display, or a wearable device having an Augmented Reality (AR) function, in addition to a display device having a normal display. The HMI 10031 can also use a display device included in a component of the vehicle 10000, such as a navigation device, an instrument panel, a Camera Monitoring System (CMS), an electronic mirror, or a lamp, as an output device that outputs visual information.

Applicable examples of the output device on which the HMI 10031 outputs auditory information include an audio speaker, a headphone, and an earphone.

Applicable examples of an output device to which the HMI 10031 outputs tactile information include a haptic element using a haptic technology. The haptic element is provided at a portion with which an occupant of the vehicle 10000 comes into contact, such as a steering wheel or a seat.

The vehicle controller 10032 controls individual portions of the vehicle 10000. The vehicle controller 10032 includes a steering controller 10081, a brake controller 10082, a drive controller 10083, a body system controller 10084, a light controller 10085, and a horn controller 10086.

The steering controller 10081 detects and controls a state of the steering system of the vehicle 10000. The steering system includes components such as a steering mechanism including a steering wheel, and an electric power steering, for example. The steering controller 10081 includes components such as a steering ECU that controls the steering system, and an actuator that drives the steering system, for example.

The brake controller 10082 detects and controls the state of a brake system of the vehicle 10000. The brake system includes components such as a brake mechanism including a brake pedal, an Antilock Brake System (ABS), and a regenerative brake mechanism, for example. The brake controller 10082 includes, for example, a brake ECU that controls a brake system, an actuator that drives the brake system, and the like.

The drive controller 10083 detects and controls the state of a drive system of the vehicle 10000. The drive system includes components such as an accelerator pedal, a driving force generation device for generating a driving force, like an internal combustion engine or a driving motor, and a driving force transmission mechanism for transmitting the driving force to wheels, for example. The drive controller 10083 includes a drive ECU that controls the drive system and an actuator that drives the drive system, for example.

The body system controller 10084 detects and controls the state of a body system of the vehicle 10000. The body system includes components such as a keyless entry system, a smart key system, a power window device, a power seat, an air conditioner, an airbag, a seat belt, and a gear lever, for example. The body system controller 10084 includes a body system ECU that controls the body system, an actuator that drives the body system, and the like. The body system controller 10084 may perform, for example, ignition control (ignition turn-on/turn-off) in accordance with a user operation. In addition, the body system controller 10084 may control an operation of opening/closing (unfolding/folding) of the side mirror.

The light controller 10085 detects and controls states of various lights of the vehicle 10000. Assumable examples of the light to be controlled include a headlight, a backlight, a fog light, a turn signal, a brake light, a projection, and a display of a bumper. The light controller 10085 includes a light ECU that controls the light, and an actuator that drives the light.

The horn controller 10086 detects and controls the state of a car horn of the vehicle 10000. The horn controller 10086 includes a horn ECU that controls a car horn, and an actuator that drives the car horn, for example.

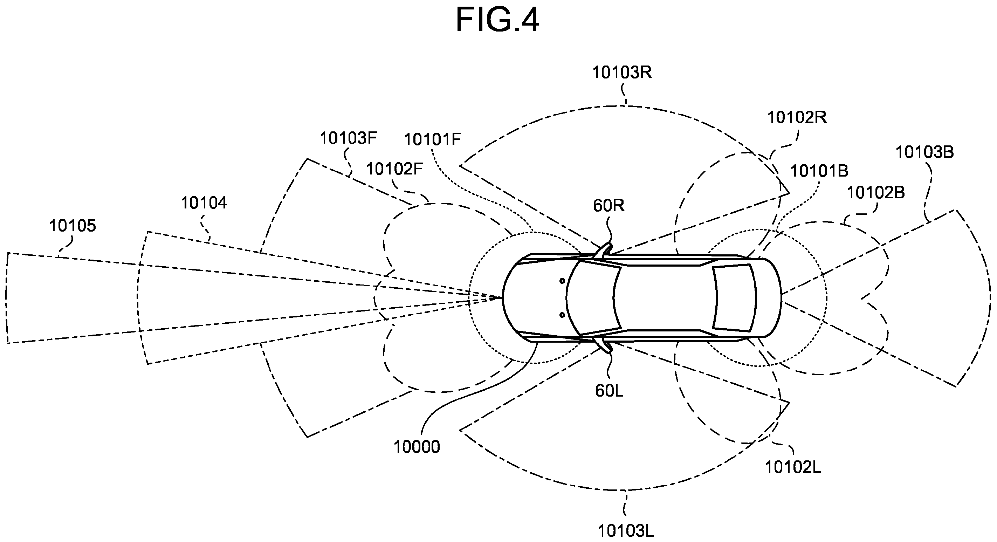

FIG. 4 is a diagram illustrating an example of sensing regions sensed by devices included in the external recognition sensor 10025, such as the camera 10051, the radar 10052, the LiDAR 10053, and the ultrasonic sensor 10054 illustrated in FIG. 3. Note that FIG. 4 schematically illustrates the top view of the vehicle 10000, in which the lower end side corresponds to the front end (front) side of the vehicle 10000 while the upper end side corresponds to the rear end (rear) side of the vehicle 10000.

A sensing region 10101F and a sensing region 10101B illustrate examples of the sensing region of the ultrasonic sensor 10054. The sensing region 10101F covers the vicinity of the front end of the vehicle 10000 by the plurality of ultrasonic sensors 10054. The sensing region 10101B covers the vicinity of the rear end of the vehicle 10000 by the plurality of ultrasonic sensors 10054.

The sensing results in the sensing region 10101F and the sensing region 10101B are used for parking assistance of the vehicle 10000, for example.

Sensing regions 10102F to 10102B illustrate examples of sensing regions of the radar 10052 for a short distance or a middle distance. The sensing region 10102F covers a position farther than the sensing region 10101F in front of the vehicle 10000. The sensing region 10102B covers a position farther than the sensing region 10101B behind the vehicle 10000. The sensing region 10102L covers the rear vicinity of the left side surface of the vehicle 10000. The sensing region 10102R covers the rear vicinity of the right side surface of the vehicle 10000.

The sensing result in the sensing region 10102F is used to detect a vehicle, a pedestrian, or the like existing in front of the vehicle 10000, for example. The sensing result in the sensing region 10102B is used for a collision prevention function behind the vehicle 10000, for example. The sensing results in the sensing region 10102L and the sensing region 10102R are used for detecting an object in a blind spot on the sides of the vehicle 10000, for example.

Sensing regions 10103F to 10103B illustrate examples of sensing regions covered by the camera 10051. The sensing region 10103F corresponds to an imaging range of the camera 10051 with its imaging direction set in front of the vehicle 10000 (appropriately referred to as a front camera), and covers up to a position farther than the sensing region 10102F in front of the vehicle 10000. The sensing region 10103B corresponds to an imaging range of the camera 10051 having an imaging direction in rear of the vehicle 10000 (appropriately referred to as a rear camera), and covers a position farther than the sensing region 10102B in rear of the vehicle 10000.

The sensing region 10103L covers the vicinity of the left side surface of the vehicle 10000. The sensing region 10103L is, for example, a region corresponding to the imaging range of the camera 10051 provided on a side mirror 60L on the left side surface of the vehicle 10000 (appropriately referred to as a left camera). That is, the side mirror 60L is provided with the camera 10051 so as to capture an image of a space (sensing region 10103L) on the left side of the vehicle 10000 in a state where the side mirror 60L is unfolded, in other words, in a state where side mirror 60L is normally used.

The sensing region 10103R covers the vicinity of the right side surface of the vehicle 10000. Similarly to the sensing region 10103L described above, the sensing region 10103R is a region corresponding to the imaging range of the camera 10051 provided on a side mirror 60R on the right side surface of the vehicle 10000, for example (appropriately referred to as a right camera). Similarly to the above, the side mirror 60R is provided with the camera 10051 so as to capture an image of a space (sensing region 10103R) on the right side of the vehicle 10000 in a state where the side mirror 60R is unfolded.

The sensing regions of the front camera, the rear camera, the left camera, and the right camera can substantially cover 360° ranges around the vehicle 10000. In this manner, the front camera, the rear camera, the left camera, and the right camera constitute a surround view camera. Note that the imaging section in the claims of the present disclosure corresponds to a plurality of cameras such as the front camera, the rear camera, the left camera, and the right camera.

The sensing result in the sensing region 10103F can be used for recognition of a traffic light or a traffic sign, a lane departure prevention assist system, and an automatic headlight control system, for example. The sensing result in the sensing region 10103B can be used for parking assistance, parking monitoring, and a surround view system, for example. The sensing results in the sensing region 10103L and the sensing region 10103R can be used for parking monitoring and a surround view system, for example.

A sensing region 10104 is illustrated as an example of a sensing region of the LiDAR 10053. The sensing region 10104 covers a position farther than the sensing region 10103F in front of the vehicle 10000. On the other hand, the sensing region 10104 has a narrower range in the left-right direction than the sensing region 10103F.

The sensing result in the sensing region 10104 is used for detecting an object such as a surrounding vehicle, for example.

A sensing region 10105 is illustrated as an example of a sensing region of the radar 10052 for a long distance. The sensing region 10105 covers a position farther than the sensing region 10104 in front of the vehicle 10000. On the other hand, the sensing region 10105 has a narrower range in the left-right direction than the sensing region 10104. The sensing result in the sensing region 10105 is used for purposes such as Adaptive Cruise Control (ACC), emergency braking, and collision avoidance, for example.

Note that the sensing regions of the sensors of the camera 10051, the radar 10052, the LiDAR 10053, and the ultrasonic sensor 10054 included in the external recognition sensor 10025 may have various configurations other than those in FIG. 4. Specifically, the ultrasonic sensor 10054 may also sense the sides of the vehicle 10000, or the LiDAR 10053 may sense the rear of the vehicle 10000. In addition, the installation position of each sensor is not limited to each example described above. The number of each sensor may be one or plurality.

### (3. First embodiment of present disclosure)

Next, a first embodiment of the present disclosure will be described. The in-vehicle monitoring system according to the first embodiment performs stepwise control of increasing the resolution of image data to be subjected to sensing processing in accordance with a result of the sensing processing on the image data captured by the image sensor. This makes it possible to suppress power consumption in the parking monitoring system.

### (3-1. Outline of imaging control according to first embodiment)

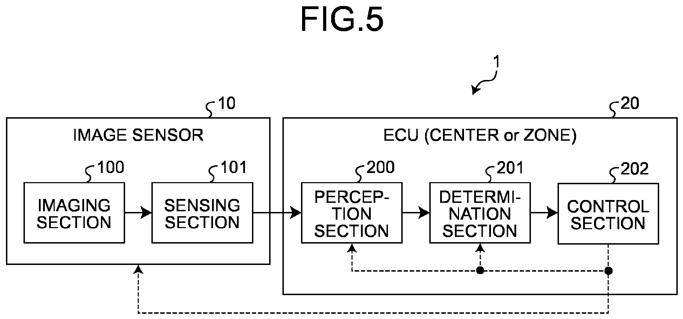

FIG. 5 is a block diagram schematically illustrating a configuration of an example of an in-vehicle monitoring apparatus 1 according to the first embodiment. In FIG. 5, the in-vehicle monitoring apparatus 1 according to the first embodiment includes an image sensor 10 and an ECU 20 individually mounted on a vehicle.

The image sensor 10 includes an imaging section 100 and a sensing section 101. The imaging section 100 includes an imaging element and a drive circuit that drives the imaging element, and outputs image data generated by imaging using the imaging element. The sensing section 101 performs moving object sensing and human sensing based on the image data output from the imaging section 100. The image sensor 10 may transmit the image data output from the imaging section 100 to the ECU 20.

The ECU 20 includes a perception section 200, a determination section 201, and a control section 202. The perception section 200 executes perception processing based on the image data transmitted from the image sensor 10. The determination section 201 may determine whether to record the image data transmitted from the image sensor 10. Note that the image data may be recorded for a certain period of time regardless of the determination by the determination section 201. The control section 202 controls recording of the image data in a storage device in accordance with the determination result of the determination section 201. Furthermore, the control section 202 sets an operation mode of the image sensor 10. Furthermore, the control section 202 can communicate with each portion of the vehicle control system 10011 via the communication network 10041.

The storage device is a nonvolatile recording medium such as a hard disk drive or flash memory, and is built in the in-vehicle monitoring apparatus 1. Alternatively, the storage device may be connected to the in-vehicle monitoring apparatus 1 via a predetermined cable or communication means so as to be provided as an external device for the in-vehicle monitoring apparatus 1.

The ECU 20 includes a versatile processor such as a CPU and a processor specialized for image processing such as an ISP. The ECU 20 may control the entire vehicle (center) as in the vehicle control ECU 10021 of FIG. 3 or may control a part of the vehicle (zone). Not limited this configuration, the ECU 20 may be included in the in-vehicle monitoring apparatus 1.

Although the above has described that the in-vehicle monitoring apparatus 1 is a single apparatus including the image sensor 10 and the ECU 20, the configuration is not limited to this example. For example, the in-vehicle monitoring apparatus 1 may separate the image sensor 10 and the ECU 20 from each other and configure an in-vehicle monitoring system in which the image sensor 10 and the ECU 20 remotely communicate with each other.

In the image sensor 10, imaging is performed by the imaging section 100. The sensing section 101 executes sensing processing based on the captured image data. The image sensor 10 has a moving object sensing mode, a human sensing mode, and a recording mode as operation modes in the parking monitoring operation. The moving object sensing mode is an operation mode of sensing a moving object using low-resolution image data (hereinafter, appropriately referred to as a low-resolution image). The human sensing mode is an operation mode of sensing a human using medium-resolution image data (hereinafter, appropriately referred to as a medium-resolution image) having a resolution higher than the resolution of a low-resolution image. The recording mode is an operation mode of acquiring high-resolution image data (hereinafter, referred to as a high-resolution image) having a resolution higher than the resolution of a medium-resolution image in order to record image data on a recording medium.

For example, the operation mode of the image sensor 10 is set to the moving object sensing mode in response to a trigger from the ECU 20. The image sensor 10 sets the operation mode to the human sensing mode in accordance with the sensing result of the moving object sensing mode, for example. Furthermore, the image sensor 10 sets the operation mode to the recording mode in accordance with the sensing result of the human sensing mode.

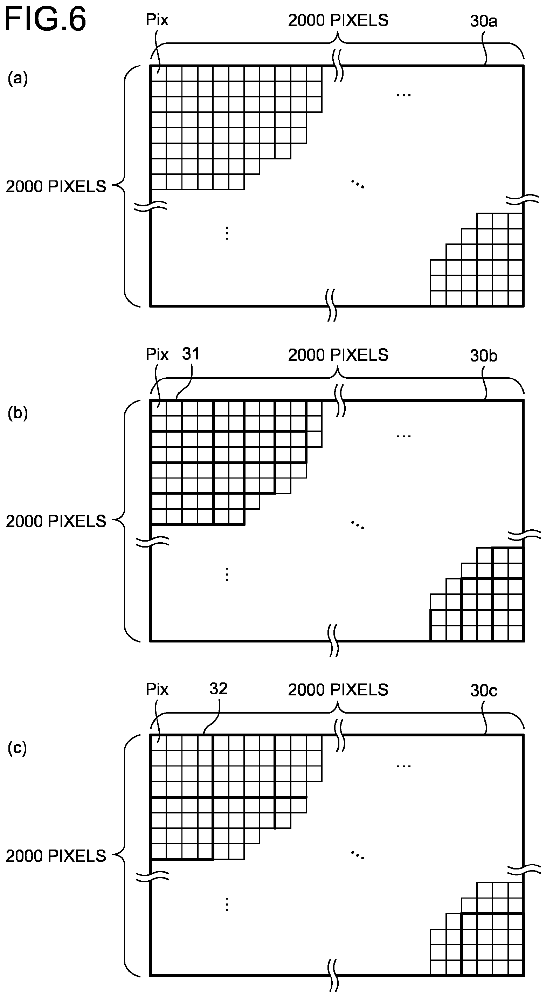

FIG. 6 is a schematic diagram for illustrating a low-resolution image, a medium-resolution image, and a high-resolution image according to the first embodiment. Here, for the sake of convenience, it is assumed that the imaging element included in the image sensor 10 includes pixels Pix of 2000 pixels ×2000 pixels arranged in a matrix in the effective pixel region.

In FIG. 6, section (a) illustrates an example of a high-resolution image 30a. The high-resolution image 30a is processed with a resolution of 2000 pixels ×2000 pixels per frame in units of pixels Pix. The high-resolution image 30a may be, for example, image data having the maximum resolution output by the imaging section 100.

In FIG. 6, section (b) illustrates an example of a medium-resolution image 30b. In this example, the medium-resolution image 30b is processed in units of a block 31 of 2 pixels × 2 pixels. When the block 31 is regarded as one pixel, the medium-resolution image 30b is processed with a resolution of 100 pixels × 100 pixels in a frame having the same size as the high-resolution image 30a. For example, it is sufficient that the medium-resolution image 30b has a resolution enough to allow the sensing section 101 to sense a human-like image (such as a silhouette of a human).

Furthermore, section (c) illustrates an example of a low-resolution image 30c. In this example, the low-resolution image 30c is processed in units of a block 32 of 4 pixels × 4 pixels. When the block 32 is regarded as one pixel, the low-resolution image 30c is processed with a resolution of 50 pixels × 50 pixels in a frame having the same size as the high-resolution image 30a. It is sufficient that the low-resolution image 30c has a resolution that allows the sensing section 101 to sense a moving object, for example.

For example, in the low-resolution image 30c, each block 32 may determine the pixel value in a case where the block 32 is regarded as a pixel by adopting a representative value of the pixel value of each pixel Pix included in the block 32. The representative value may be determined by adopting, for example, a region average in the block 32. Not limited to this, each block 32 may be configured by thinning out the pixels Pix in the effective pixel region in accordance with the resolution. These methods can be similarly applied to the generation of the medium-resolution image 30b.

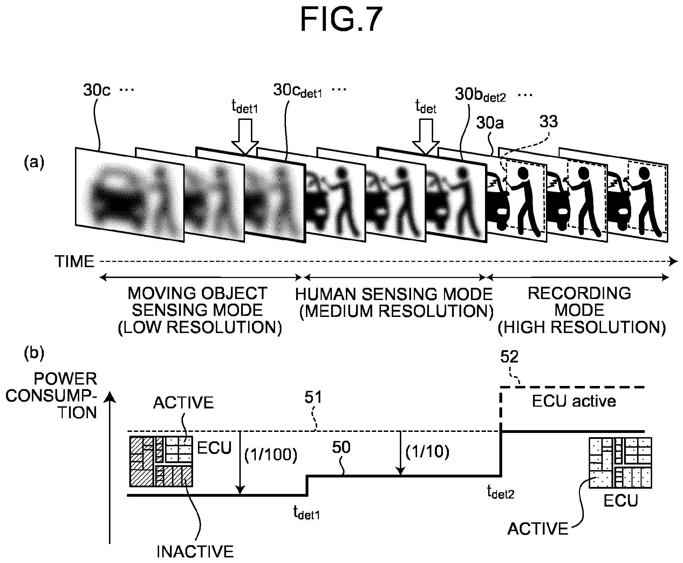

FIG. 7 is a schematic diagram for illustrating an operation of the in-vehicle monitoring apparatus 1 according to the first embodiment. As illustrated in section (a) of FIG. 7, in the in-vehicle monitoring apparatus 1, the image sensor 10 first uses the sensing section 101 to execute moving object sensing processing based on the low-resolution image 30c in the moving object sensing mode. It is assumed that the sensing section 101 has sensed a moving object in a low-resolution image 30c_{det1} acquired at time t_{det1}. For example, the sensing section 101 uses the medium-resolution image 30b to execute human sensing processing from a frame next to the low-resolution image 30c_{det1} in which a moving object has been sensed. The ECU 20 may stop operation or make a transition to a power saving mode during a period in which the moving object sensing processing and the human sensing processing are performed by the sensing section 101.

It is assumed that the sensing section 101 has sensed a human in a medium-resolution image 30b_{det2} acquired at time t_{det2}. In the in-vehicle monitoring apparatus 1, the ECU 20 restores its operation mode to the normal operation mode triggered by the human sensing by the sensing section 101. In the normal operation mode of the ECU 20, the perception section 200 may execute, for example, the perception processing or the like by focusing on a region 33 where a human has been sensed, using the high-resolution image 30a from the next frame of the medium-resolution image 30b_{det2} where the human has been sensed.

In FIG. 7, section (b) schematically illustrates an example of power consumption of the image sensor 10 and the ECU 20 according to the first embodiment. In the section (b) of FIG. 7, the horizontal axis represents time corresponding to the section (a) of the diagram, and the vertical axis represents power consumption. Note that, in the drawing, a magnitude relationship of power consumption between the ECU 20 and the image sensor 10 is not limited to this example.

As illustrated in a characteristic line 50 in the section (b) of FIG. 7, the image sensor 10 operates with low power consumption in the moving object sensing mode. When the moving object is sensed at time t_{det1} and the operation mode transitions to the human sensing mode, the operation is performed with medium power consumption. When a human is sensed at time t_{det2} and the operation mode transitions to the recording mode, the image sensor 10 operates with higher power consumption than in the human sensing mode. As an example, in comparison of the characteristic line 50 with a characteristic line 51 indicating the power consumption in the recording mode, the power consumption of the image sensor 10 in the moving object sensing mode is about 1/100 of the recording mode, while the power consumption of the image sensor 10 in the human sensing mode is about 1/10 of the recording mode.

On the other hand, regarding the ECU 20, until the operation mode of the in-vehicle monitoring apparatus 1 transitions to the recording mode at time t_{det2}, only some functions are active and the remaining functions are inactive, and power consumption is suppressed to an extremely low level. In the recording mode from time t_{det2}, the ECU 20 is entirely active and uses high power consumption as indicated by a characteristic line 52 for example.

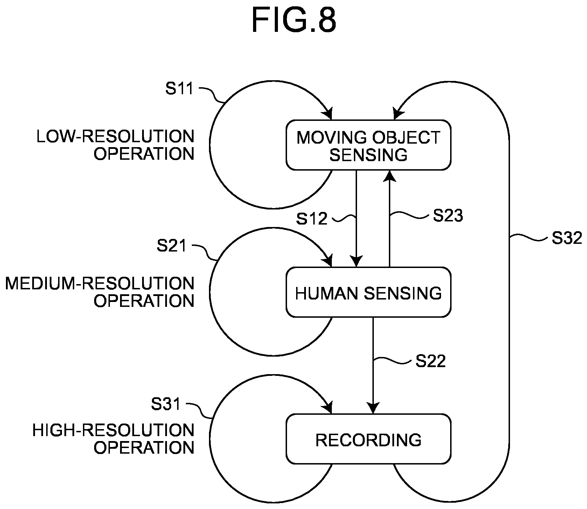

FIG. 8 is a schematic diagram for illustrating each operation mode and its transition in the in-vehicle monitoring apparatus 1 according to the first embodiment.

In the moving object sensing mode, the in-vehicle monitoring apparatus 1 senses the motion in the low-resolution image 30c acquired by the image sensor 10 (Step S11). In the moving object sensing mode, the in-vehicle monitoring apparatus 1 acquires the low-resolution image 30c (refer to FIG. 6) in processing units of 50 × 50, for example, and executes moving object sensing processing. Furthermore, in the moving object sensing mode, the in-vehicle monitoring apparatus 1 allows operation of only the minimum necessary processing blocks for moving object sensing in the chip constituting the image sensor 10, for example, thereby achieving low power consumption (first power consumption mode). Furthermore, in the moving object sensing mode, since the image sensor 10 side is responsible for the sensing processing, the subsequent stage chip (for example, the ECU 20) may operate in a processing stop state or a power saving mode.

Note that, creating the low-resolution image 30c using the region average of the pixel values in the block 32 (refer to FIG. 6) will suppress the influence of noise and increase the performance at night. In addition, the in-vehicle monitoring apparatus 1 may perform preprocessing such as geometric transformation and luminance scaling before input of moving object sensing.

When a motion is sensed in the moving object sensing mode, the in-vehicle monitoring apparatus 1 makes a transition of the operation mode to the human sensing mode (Step S12).

In the human sensing mode, the in-vehicle monitoring apparatus 1 senses a human included in the medium-resolution image 30b acquired by the image sensor 10 (Step S21). In the human sensing mode, the in-vehicle monitoring apparatus 1 acquires the medium-resolution image 30b (refer to FIG. 6) in processing units of 100 × 100, for example, and executes human sensing processing. Furthermore, in the human sensing mode, similarly to the moving object sensing mode, for example, by allowing operation of only the minimum necessary processing blocks for human sensing in the chips constituting the image sensor 10, low power consumption can be achieved (second power consumption mode). In the human sensing mode performs human sensing processing using the medium-resolution image 30b having a higher resolution than that in the moving object sensing mode, and thus uses power consumption higher than that in the moving object sensing mode. Furthermore, in the human sensing mode, similarly to the moving object sensing mode, since the image sensor 10 side is responsible for the sensing processing, the subsequent stage chip (for example, the ECU 20) may operate in the processing stop state or the power saving mode.

Note that, creating the medium-resolution image 30b using the region average of the pixel values in the block 31 (refer to FIG. 6) will suppress the influence of noise and increase the performance at night. In addition, the in-vehicle monitoring apparatus 1 may perform preprocessing such as geometric conversion and luminance scaling before input of human sensing.

When a human is sensed in the human sensing mode, the in-vehicle monitoring apparatus 1 makes a transition of the operation mode to the recording mode (Step S22). On the other hand, when no human is sensed for a certain period of time in the human sensing mode, the in-vehicle monitoring apparatus 1 may make a transition of the operation mode of the image sensor 10 to the moving object sensing mode (Step S23).

In the recording mode, the in-vehicle monitoring apparatus 1 records the image data acquired by the image sensor 10 on the recording medium (Step S31). In the recording mode, the in-vehicle monitoring apparatus 1 acquires the high-resolution image 30a (refer to FIG. 6), and records the acquired high-resolution image 30a. After the recording processing of the high-resolution image 30a in the recording mode, the in-vehicle monitoring apparatus 1 makes a transition of the operation mode to the moving object sensing mode (Step S32).

### (3-2. Configuration related to imaging control of first embodiment)

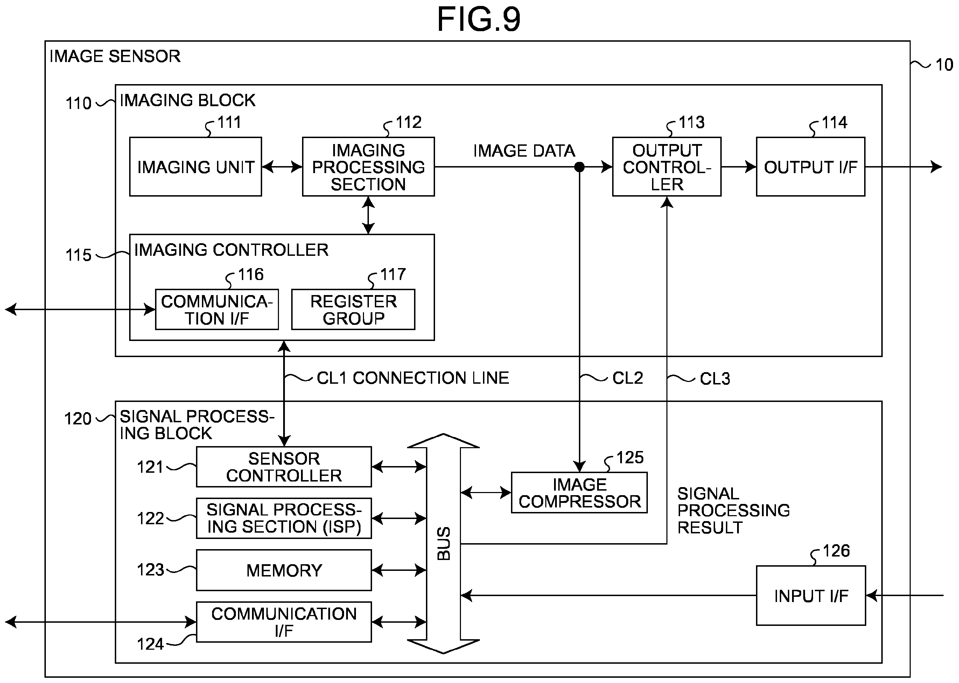

Next, a configuration related to imaging control according to the first embodiment will be described in more detail. FIG. 9 is a block diagram illustrating a configuration of an example of the image sensor 10 according to the first embodiment. In the example of FIG. 9, the image sensor 10 includes: an imaging block 110 that executes imaging processing; and a signal processing block 120 that executes processing in each operation mode described above on the image data acquired by the imaging block 110.

In FIG. 9, the image sensor 10 includes the imaging block 110 and the signal processing block 120. The imaging block 110 and the signal processing block 120 are electrically connected to each other via connection lines CL1 and CL2 and CL3 each of which being an internal bus.

The imaging block 110 includes an imaging unit 111, an imaging processing section 112, an output controller 113, an output interface (I/F) 114, and an imaging controller 115, and images a subject to obtain a captured image.

The imaging unit 111 includes a pixel array in which a plurality of pixels, each of which is a light receiving element that outputs a signal corresponding to light received by photoelectric conversion, is arranged according to a matrix array. The imaging unit 111 is driven by the imaging processing section 112 and images a subject.

That is, the imaging unit 111 receives incident light from an optical system (not illustrated). The imaging unit 111 receives incident light from the optical system in each pixel included in the pixel array, performs photoelectric conversion, and outputs an analog image signal corresponding to the incident light.

The size of the image formed with the image signal output by the imaging unit 111 can be selected from among a plurality of sizes (width × height) such as 3968 pixels × 2976 pixels, 1920 pixels × 1080 pixels, and 640 pixels × 480 pixels, for example. The image size that can be output by the imaging unit 111 is not limited to this example. Furthermore, the image to be output by the imaging unit 111, for example, can be selectably determined to be a Red-Green-Blue (RGB) color image or a monochrome image having only luminance information. These selections for the imaging unit 111 can be made as a type of image shooting mode setting.

Note that information based on the output of each pixel arranged in a matrix in the pixel array is referred to as a frame. In the imaging unit 111, the image sensor 10 repeatedly acquires information of the pixels in a matrix at a predetermined rate (frame rate) in chronological order. The image sensor 10 collectively outputs the acquired information frame by frame.

Under the control of the imaging controller 115, the imaging processing section 112 performs imaging processing related to imaging regarding an image in the imaging unit 111, such as driving of the imaging unit 111, Analog to Digital (AD) conversion of an analog image signal output from the imaging unit 111, and imaging signal processing.

Examples of the imaging signal processing performed by the imaging processing section 112 may include processing of obtaining brightness for each predetermined small region by calculating an average value of pixel values for each small region for the image output by the imaging unit 111, Auto Gain Control (AGC) processing, and noise removal processing.

The imaging processing section 112 outputs a digital image signal obtained by AD conversion or the like on an analog image signal output from the imaging unit 111, as image data. The image data output from the imaging processing section 112 may be image data (RAW data) of a RAW image that is not subjected to processing such as development.

The image data output from the imaging processing section 112 is supplied to the output controller 113 and also supplied to an image compressor 125 of the signal processing block 120 via the connection line CL2.

The output controller 113 receives the image data supplied from the imaging processing section 112, and receives a signal processing result of signal processing using the image data and the like supplied from the signal processing block 120 via the connection line CL3.

The output controller 113 performs output control of selectively outputting image data from the imaging processing section 112 and the signal processing result from the signal processing block 120, from the (one) output I/F 114 to the outside (for example, a recording medium connected to the outside of the ECU 20 or the image sensor 10). That is, the output controller 113 selects either the image data from the imaging processing section 112 or the signal processing result from the signal processing block 120, and supplies the selected data to the output I/F 114.

The output I/F 114 is an interface that outputs the image data and the signal processing result supplied from the output controller 113, to the outside. For example, a relatively high-speed parallel I/F such as a Mobile Industry Processor Interface (MIPI) can be adopted as the output I/F 114.

The output I/F 114 outputs the image data from the imaging processing section 112 or the signal processing result from the signal processing block 120 to the outside under the output control of the output controller 113. Therefore, for example, in a case where only the signal processing result from the signal processing block 120 is required but image data by RAW data is not required on the outside, it is possible to selectively output the signal processing result alone, enabling reduction of the amount of data output from the output I/F 114 to the outside.

Furthermore, by allowing the signal processing block 120 to perform signal processing of obtaining a signal processing result required outside and outputting the signal processing result via the output I/F 114, there will be no need to perform signal processing outside, enabling reduction of a load on an external block.

The imaging controller 115 includes a communication I/F 116 and a register group 117.

The communication I/F 116 is, for example, a first communication I/F such as a serial communication I/F on an Inter-Integrated Circuit (I²C), and exchanges necessary information such as information to be read from and written to the register 117 group with the outside (for example, the ECU 20).

The register group 117 includes a plurality of registers and stores imaging information related to imaging of an image in the imaging unit 111 and various other information. For example, the register group 117 stores imaging information received from the outside at the communication I/F 116 and imaging signal processing results (for example, brightness and the like for each small region of the captured image) in the imaging processing section 112.

The imaging information stored in the register group 117 includes, for example, information of (or representing) International Organization for Standardization (ISO) sensitivity (analog gain at the time of AD conversion in the imaging processing section 112), exposure time (shutter speed), frame rate, focus, image shooting mode, clipping range, and the like.

The image shooting mode includes, for example, a manual mode in which an exposure time, a frame rate, and the like are manually set, and an automatic mode in which the exposure time, the frame rate, and the like are automatically set in accordance with a scene. Examples of the automatic mode include modes corresponding to various image shooting scenes such as a night scene and a human's face.

Furthermore, the clipping range represents a range to be clipped from an image output by the imaging unit 111 in a case where a part of the image output by the imaging unit 111 is to be clipped and output as image data in the imaging processing section 112. By designating the clipping range, for example, it is possible to clip only a range including a human from the image output by the imaging unit 111. Image clipping may be performed not only by a method of clipping from an image output from the imaging unit 111 but also by a method of reading only an image (signal) corresponding to a clipping range, from the imaging unit 111.

The imaging controller 115 controls the imaging processing section 112 according to the imaging information stored in the register group 117, thereby controlling capturing of an image in the imaging unit 111.

Note that the register group 117 can store not only the imaging information and a result of imaging signal processing in the imaging processing section 112, but also output control information related to output control in the output controller 113. The output controller 113 can perform output control of selectively outputting the captured image and the signal processing result in accordance with the output control information stored in the register group 117.

Furthermore, in the image sensor 10, the imaging controller 115 and a sensor controller 121 of the signal processing block 120 are connected via a connection line CL1. Accordingly, the sensor controller 121 can read and write information from and to the register group 117 via the connection line CL1. That is, in the image sensor 10, reading and writing of information from and to the register group 117 can be performed not only from the communication I/F 116 but also from the sensor controller 121.

The signal processing block 120 includes the sensor controller 121, a signal processing section 122, memory 123, a communication I/F 124, the image compressor 125, and an input I/F 126, and performs predetermined signal processing using a captured image or the like obtained by the imaging block 110. The sensor controller 121 may be a processor such as a CPU or a Micro Processor Unit (MPU), a Micro Controller Unit (MCU), or the like.

The sensor controller 121, the signal processing section 122, the memory 123, the communication I/F 124, and the input I/F 126, being portions constituting the signal processing block 120, are connected to each other via a bus, and can exchange information as necessary.

The sensor controller 121 executes the program stored in the memory 123 to perform control of the signal processing block 120, reading and writing of information from and to the register group 117 of the imaging controller 115 via the connection line CL1, and other various types of processing.

For example, by executing the program, the sensor controller 121 functions as an imaging information calculation section that calculates imaging information by using a signal processing result obtained by signal processing in the signal processing section 122. The sensor controller 121 performs feedback of new imaging information calculated by using the signal processing result to the register group 117 of the imaging controller 115 via the connection line CL1 so as to be stored in the register group 117.

Therefore, as a result, the sensor controller 121 can control imaging in the imaging unit 111 and imaging signal processing in the imaging processing section 112 in accordance with the signal processing result of the captured image.

Furthermore, the imaging information stored in the register group 117 by the sensor controller 121 can be provided (output) to the outside from the communication I/F 116. For example, the focus information in the imaging information stored in the register group 117 can be provided from the communication I/F 116 to a focus driver (not illustrated) that controls the focus.

The signal processing section 122 performs image processing on image data supplied from the imaging block 1102 to the signal processing block 120 via the connection line CL2 and signal processing using information received from the outside by the input I/F 126.

For example, the signal processing section 122 may perform development processing on image data being RAW data supplied from the imaging processing section 112 to generate RGB data in which each pixel has color data of red (R), green (G), and blue (B). The processing is not limited thereto, and the signal processing section 122 may execute defect correction, Auto White Balance (AWB) processing, High Dynamic Range (HDR) conversion processing of converting the image data supplied from the imaging processing section 112 into a high dynamic range (HDR) image, and the like.

The signal processing section 122 may further include a function as an ISP. The signal processing section 122 executes the moving object sensing processing in the moving object sensing mode and the human sensing processing in the human sensing mode described above. For example, the signal processing section 122 may execute the moving object sensing processing and the human sensing processing described above using a machine learning model for the moving object sensing and the human sensing, individually. The processing is not limited thereto, and the signal processing section 122 may perform moving object sensing by using motion vector detection based on a difference in image data between frames, or may perform human sensing by using pattern matching or the like.

The signal processing section 122 controls the transition of the operation mode illustrated in FIG. 8 based on the sensing results of the moving object sensing processing and the human sensing processing. In addition, the signal processing section 122 may include the sensing results of the moving object sensing processing and the human sensing processing in the signal processing result and output the obtained signal processing result.

The memory 123 includes Static Random Access Memory (SRAM), Dynamic RAM (DRAM), and the like, and stores data and the like necessary for processing of the signal processing block 120.

For example, the memory 123 stores a program received from the outside at the communication I/F 124, a captured image compressed by the image compressor 125 and used in signal processing in the signal processing section 122, a signal processing result of the signal processing performed in the signal processing section 122, information received by the input I/F 126, and the like.

The communication I/F 124 is, for example, a second communication I/F such as a serial communication I/F including a Serial Peripheral Interface (SPI), and exchanges necessary information such as a program executed by the sensor controller 121 or the signal processing section 122 with the outside (for example, the ECU 20).

For example, the communication I/F 124 downloads a program executed by the sensor controller 121 or the signal processing section 122 from the outside, supplies the obtained program to the memory 123 so as to be stored therein. Therefore, the sensor controller 121 and the signal processing section 122 can execute various processing by the program downloaded by the communication I/F 124.

Note that the communication I/F 124 can exchange not only programs but also any other data with the outside. For example, the communication I/F 124 can output a signal processing result obtained by the signal processing in the signal processing section 122 to the outside. In addition, the communication I/F 124 outputs information according to an instruction from the sensor controller 121 to an external device, whereby the external device can be controlled in accordance with the instruction from the sensor controller 121.

The signal processing result obtained by the signal processing in the signal processing section 122 can be output from the communication I/F 124 to the outside, and can be written in the register group 117 of the imaging controller 115 by the sensor controller 121. The signal processing result written in the register group 117 can be output from the communication I/F 116 to the outside. The similar applies to the processing result obtained in the processing performed by the sensor controller 121.

A captured image is supplied from the imaging processing section 112 to the image compressor 125 via the connection line CL2. The image compressor 125 performs compression processing for compressing image data, and generates compressed image data having a smaller data amount than the image data before the processing. The compressed image data generated by the image compressor 125 is supplied to the memory 123 via the bus so as to be stored therein.

Here, the signal processing in the signal processing section 122 can be performed using not only the image data itself but also the compressed image data generated from the image data by the image compressor 125. Since the compressed image data has a smaller data amount than the image data supplied from the imaging processing section 112, it is possible to reduce the load of signal processing in the signal processing section 122 and save the storage capacity of the memory 123 that stores the compressed image data.

As the compression processing in the image compressor 125, for example, it is possible to perform downscaling of converting a captured image of 3968 pixels ×2976 pixels into an image of 640 pixels ×480 pixels. Furthermore, in a case where the signal processing in the signal processing section 122 is performed on luminance and the image data is RGB data, it is possible to perform YUV conversion of converting RGB data into YUV image data, for example, as the compression processing.

Note that the image compressor 125 can be either implemented by software by implemented or by dedicated hardware.

The input I/F 126 is an I/F that receives information from the outside. The input I/F 126 receives, for example, an output of an external sensor (external sensor output) from the external sensor, supplies the external sensor output to the memory 123 via a bus so as to be stored therein. The input I/F 126 can be implemented by adopting, for example, a parallel I/F such as an MIPI, similarly to the output I/F 114.

Furthermore, the external sensor can be implemented by adopting, for example, a distance sensor that senses information related to distance. Furthermore, the external sensor can be implemented by adopting, for example, an image sensor that senses light and outputs an image corresponding to the light, that is, an image sensor different from the image sensor 10.

In the signal processing section 122 can perform signal processing not only by using a captured image or a compressed image generated from the captured image, but by using external sensor output received by the input I/F 126 from an external sensor as described above and stored in the memory 123.

In the image sensor 10 configured as described above, the signal processing section 122 performs signal processing using the image data obtained by imaging by the imaging unit 111 or the compressed image data generated from the image data, and then, the signal processing result of the signal processing, and the image data, are selectively output from the output I/F 114. This can miniaturize the image sensor 10 that outputs information required by the user.

Here, the image sensor 10 can output image data without performing signal processing by the signal processing section 122. That is, in this case, the image sensor 10 is configured to simply capture and output an image. In this case, the image sensor 10 can include only the imaging block 110 without the output controller 113. In this case, the moving object sensing processing and the human sensing processing may be executed at an output destination (such as ECU 20) of the output I/F 114.

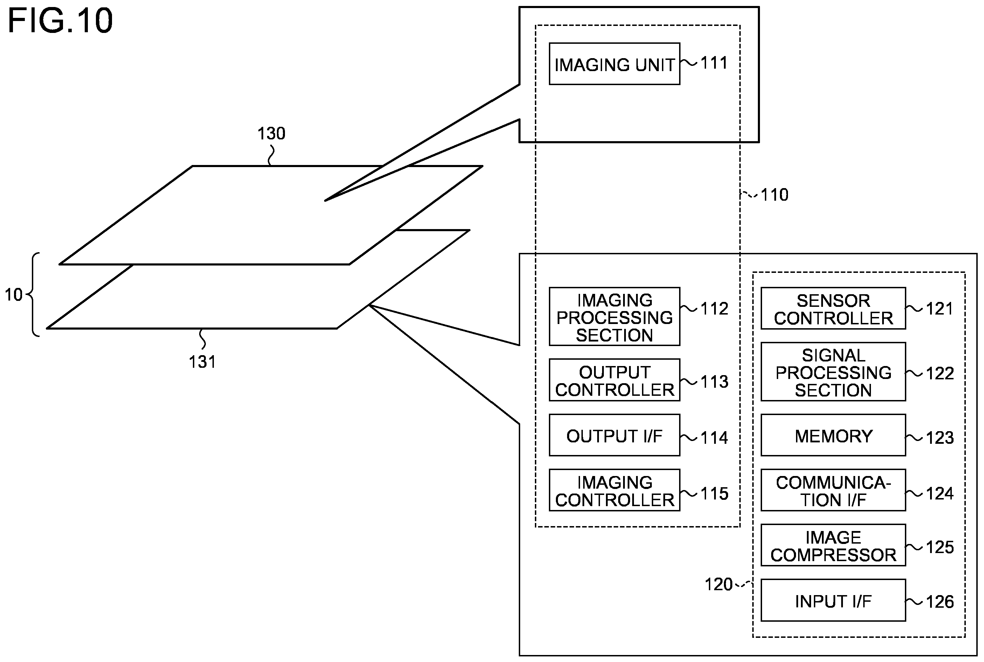

FIG. 10 is a perspective view schematically illustrating a structure of an example of the image sensor 10 according to the first embodiment described with reference to FIG. 9.

For example, as illustrated in FIG. 10, the image sensor 10 can be configured as a one-chip semiconductor device having a stacked structure including a stack of a plurality of dies. In the example of FIG. 10, the image sensor 10 is configured as a one-chip semiconductor device in which two dies of dies 130 and 131 are stacked.

Note that the die refers to a small thin piece of silicon containing an electronic circuit, and a chip refers to an individual body in which one or more dies are packaged.

In FIG. 10, the die 130, being an upper die, is equipped with the imaging unit 111. Furthermore, the die 131, being a lower die, is equipped with the imaging processing section 112, the output controller 113, the output I/F 114, and the imaging controller 115. In this manner, in the example of FIG. 10, the imaging unit 111 of the imaging block 110 is mounted on the die 130, and portions other than the imaging unit 111 are mounted on the die 131. The die 131 is further equipped with the signal processing block 120 including the sensor controller 121, the signal processing section 122, the memory 123, the communication I/F 124, the image compressor 125, and the input I/F 126.

When the configuration of FIG. 10 is applied to the configuration of FIG. 5, the image sensor 10 can be considered to integrally include the imaging section 100 and the sensing section 101 on one chip.

The upper die 130 and the lower die 131 are electrically connected to each other by forming a through hole that penetrates the die 130 and reaches the die 131, for example. The configuration is not limited thereto, and the dies 130 and 131 may be electrically connected by performing metal-metal wiring such as Cu-Cu bonding that directly interconnects metal wiring such as Cu exposed on the lower surface side of the die 130 and metal wiring such as Cu exposed on the upper surface side of the die 131.

Here, examples of methods applicable to perform, in the imaging processing section 112, AD conversion of the image signal output from the imaging unit 111 include a column-parallel AD method or an area AD method.

In the column-parallel AD method, for example, an Analog to Digital Converter (ADC) is provided for columns of pixels constituting the imaging unit 111, and the ADC of each column is in charge of AD conversion of a pixel signal of a pixel of the column, allowing AD conversion of an image signal of a pixel of each column of one row to be performed in parallel. In a case where the column-parallel AD method is adopted, a part of the imaging processing section 112 that performs AD conversion of the column-parallel AD method may be mounted on the upper die 130.

In the area AD method, pixels constituting the imaging unit 111 are divided into a plurality of blocks, and an ADC is provided for each block. The ADC of each block is in charge of AD conversion of the pixel signals of the pixels of the block, allowing AD conversion of the image signals of the pixels of the plurality of blocks to be performed in parallel. With the area AD method, AD conversion (reading and AD conversion) of the image signal can be performed only for necessary pixels among the pixels constituting the imaging unit 111 with a block as a minimum unit.

Incidentally, when the image sensor 10 is allowed to take a large area, the image sensor 10 can be formed with one die.

Furthermore, although the example of FIG. 10 uses two dies 130 and 131 stacked to configure the image sensor 10 being a one-chip sensor, the image sensor 10 being a one-chip sensor can be configured by stacking three or more dies. For example, in a case where the image sensor 10 being a one-chip sensor is configured by stacking three dies, the memory 123 mounted on the die 131 in FIG. 10 can be mounted on a die that isn't either the dies 130 or 131.

Here, an image sensor in which chips as a sensor chip, a memory chip, and a DSP chip are interconnected in parallel by a plurality of bumps, (hereinafter, also referred to as a bump connection sensor) has a greatly increased thickness as compared with the image sensor 10 being a one-chip sensor and having a stacked structure, leading to enlargement of the device.

Furthermore, due to signal deterioration or the like at the connection portion of the bump, the bump connection sensor might have a problem of difficulty in reliably obtaining a sufficient output rate, that is, a rate at which a captured image is output from the imaging processing section 112 to the output controller 113.

According to the image sensor 10 having a stacked structure, it is possible to prevent the above-described problems such as enlargement of the device and a failure to reliably obtain a sufficient rate between the imaging processing section 112 and the output controller 113. Therefore, according to the image sensor 10 having a stacked structure, it is possible to miniaturize the configuration of outputting information required in processing at the subsequent stage of the image sensor 10.

In a case where the information required in the subsequent stage is image data, the image sensor 10 can output image data (RAW data, RGB data, and the like). Furthermore, in a case where information required in the subsequent stage is obtained by signal processing using image data, the image sensor 10 can perform the signal processing in the signal processing section 122 to obtain and output a signal processing result as information required by the user.

The signal processing performed in the image sensor 10, that is, the signal processing of the signal processing section 122 can be performed by adopting, for example, sensing processing of sensing a moving object or a human from image data. Furthermore, the signal processing of the signal processing section 122 may be performed by adopting, for example, recognition processing (face recognition or the like) based on the image data (RAW data) acquired by the imaging unit 111.

Furthermore, for example, the image sensor 10 can receive, by the input I/F 126, an output of a distance sensor such as a Time of Flight (ToF) sensor disposed to have a predetermined positional relationship with the image sensor 10. In this case, the signal processing of the signal processing section 122 can be performed by adopting, for example, fusion processing of integrating the output of the distance sensor and the captured image to obtain a highly accurate distance, such as processing of removing, by using the captured image, noise of the distance image obtained from the output of the distance sensor received by the input I/F 126.

Moreover, for example, the image sensor 10 can receive, by the input I/F 126, an image output from an image sensor disposed to have a predetermined positional relationship with the image sensor 10. In this case, the signal processing of the signal processing section 122 can be performed by adopting, for example, self-position estimation processing (also referred to as Simultaneously Localization And Mapping (SLAM)) using the image received by the input I/F 126 and the captured image, as a stereo image.

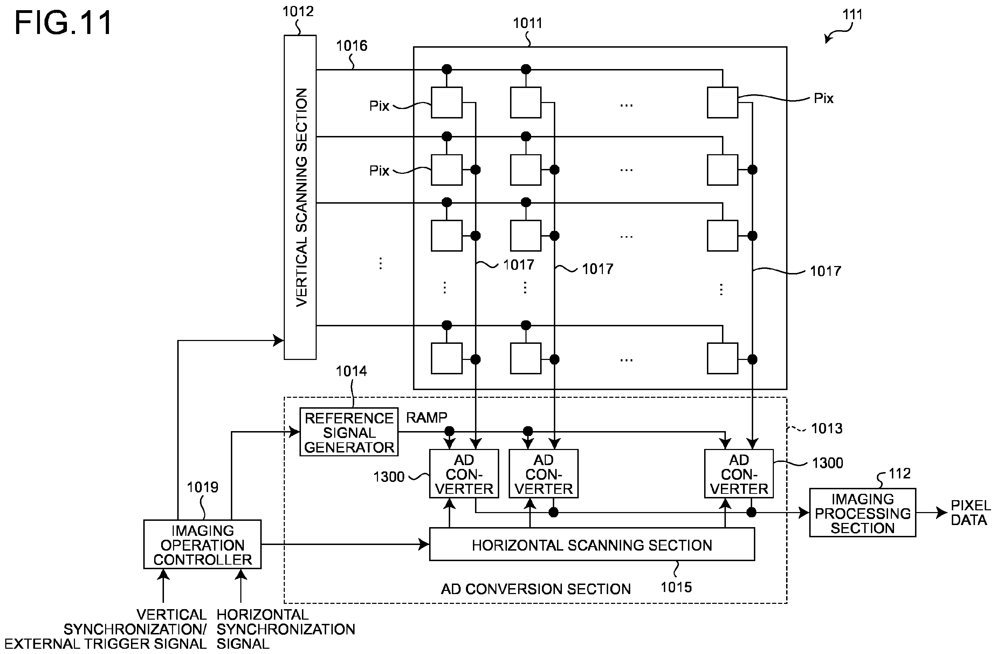

FIG. 11 is a block diagram illustrating more details of a configuration of an example of the imaging unit 111 applicable to the first embodiment. In FIG. 11, the imaging unit 111 includes a pixel array section 1011, a vertical scanning section 1012, an Analog to Digital (AD) conversion section 1013, a pixel signal line 1016, a vertical signal line 1017, an imaging operation controller 1019, and an imaging processing section 112.

The pixel array section 1011 includes a plurality of pixels Pix each having a photoelectric conversion element that performs photoelectric conversion on received light. The photoelectric conversion element can be implemented by using a photodiode. In the pixel array section 1011, the plurality of pixels Pix is arranged in a two-dimensional lattice pattern in the horizontal direction (row direction) and the vertical direction (column direction). In the pixel array section 1011, the arrangement of the pixels Pix in the row direction is referred to as a line. The pixel signals read from a predetermined number of lines in the pixel array section 1011 will form a one-frame image (image data). For example, in a case where a one-frame image is formed with 3000 pixels ×2000 lines, the pixel array section 1011 includes at least 2000 lines, each including at least 3000 pixels Pix.

Furthermore, in the pixel array section 1011, a rectangular region including the pixels Pix that output effective pixel signals for forming image data is referred to as an effective pixel region. The one-frame image is formed based on the pixel signals of the pixel Pix in the effective pixel region.

Furthermore, regarding the connection to the pixel array section 1011, the pixel signal line 1016 is connected for each row of each pixel Pix while the vertical signal line 1017 is connected for each column of each pixel Pix.

An end of the pixel signal line 1016, the end being an end not connected to the pixel array section 1011, is connected to the vertical scanning section 1012. The vertical scanning section 1012 transmits a control signal such as a drive pulse at the time of reading a pixel signal from the pixel Pix to the pixel array section 1011 via the pixel signal line 1016 under the control of the imaging operation controller 1019 described below. An end of the vertical signal line 1017, the end being an end not connected to the pixel array section 1011, is connected to the AD conversion section 1013. The pixel signal read from the pixel is transmitted to the AD conversion section 1013 via the vertical signal line 1017.

Reading control of a pixel signal from a pixel will be schematically described. Reading of the pixel signal from the pixel is performed by transferring charges accumulated in the photoelectric conversion element by exposure to a Floating Diffusion (FD) layer and converting the transferred charges into a voltage in the floating diffusion layer. The voltage obtained by converting the charge in the floating diffusion layer is output to the vertical signal line 1017 via an amplifier.

More specifically, the connection between the photoelectric conversion element and the floating diffusion layer in the pixel Pix, during exposure, is turned off (open), and charges generated in accordance with light incident by photoelectric conversion are accumulated in the photoelectric conversion element. After completion of exposure, the floating diffusion layer and the vertical signal line 1017 are connected in accordance with a selection signal supplied via the pixel signal line 1016. Furthermore, the floating diffusion layer is connected to a supply line of a power supply voltage VDD or a black level voltage for a short period of time in accordance with a reset pulse supplied via the pixel signal line 1016, so as to reset the floating diffusion layer. A voltage (referred to as a voltage P) of a reset level of the floating diffusion layer is output to the vertical signal line 1017. Thereafter, the connection between the photoelectric conversion element and the floating diffusion layer is turned on (closed) by a transfer pulse supplied via the pixel signal line 1016, allowing the charge accumulated in the photoelectric conversion element to be transferred to the floating diffusion layer. A voltage (referred to as a voltage Q) corresponding to the charge amount of the floating diffusion layer is output to the vertical signal line 1017.

The AD conversion section 1013 includes an AD converter 1300 provided for each vertical signal line 1017, a reference signal generator 1014, and a horizontal scanning section 1015. The AD converter 1300 is a column AD converter that performs AD conversion processing on each column of the pixel array section 1011. The AD converter 1300 performs AD conversion processing on the pixel signal supplied from the pixel Pix via the vertical signal line 1017, and generates two digital values (values respectively corresponding to the voltage P and the voltage Q) for Correlated Double Sampling (CDS) processing for noise reduction.

The AD converter 1300 supplies the generated two digital values to the imaging processing section 112. The imaging processing section 112 performs CDS processing based on the two digital values supplied from the AD converter 1300, and generates a pixel signal (pixel data) by a digital signal. The pixel data generated by the imaging processing section 112 is output to the outside of the imaging unit 111. Pixel data for one frame output from the imaging processing section 112 is supplied to the output controller 113 and the image compressor 125, for example, as image data.

Based on the ADC control signal input from the imaging operation controller 1019, the reference signal generator 1014 generates a ramp signal RAMP used by each AD converter 1300 to convert a pixel signal into two digital values. The ramp signal RAMP is a signal whose level (voltage value) decreases at a constant slope with respect to time, or a signal whose level decreases stepwise. The reference signal generator 1014 supplies the generated ramp signal RAMP to each AD converter 1300. The reference signal generator 1014 includes, for example, a Digital-to-Analog (DA) conversion circuit or the like.

Under the control of the imaging operation controller 1019, the horizontal scanning section 1015 performs selective scanning of selecting each AD converter 1300 in a predetermined order, thereby sequentially outputting each digital value temporarily held by each AD converter 1300 to the imaging processing section 112. The horizontal scanning section 1015 includes, for example, a shift register, an address decoder, and the like.

The imaging operation controller 1019 performs drive control of the vertical scanning section 1012, the AD conversion section 1013, the reference signal generator 1014, the horizontal scanning section 1015, and the like. The imaging operation controller 1019 generates various drive signals to be references for operations of the vertical scanning section 1012, the AD conversion section 1013, the reference signal generator 1014, and the horizontal scanning section 1015. The imaging operation controller 1019 generates a control signal for the vertical scanning section 1012 to supply to each pixel Pix via the pixel signal line 1016 based on a vertical synchronization signal or an external trigger signal supplied from the outside (for example, the sensor controller 121) and a horizontal synchronization signal. The imaging operation controller 1019 supplies the generated control signal to the vertical scanning section 1012.

Based on the control signal supplied from the imaging operation controller 1019, the vertical scanning section 1012 supplies various signals including the drive pulse to the pixel signal line 1016 of the selected pixel row of the pixel array section 1011 to each pixel Pix for each line, so as to allow each pixel Pix to output the pixel signal to the vertical signal line 1017. The vertical scanning section 1012 includes, for example, a shift register, an address decoder, and the like.

The imaging unit 111 configured as described above is a column AD type Complementary Metal Oxide Semiconductor (CMOS) image sensor in which the AD converter 1300 is disposed for each column.

Note that, in the imaging unit 111, by achieving the commonality of the floating diffusion layers by the plurality of pixels Pix, it is possible to obtain a region sum of the pixel values of the plurality of pixels Pix. For example, by achieving the commonality of the floating diffusion layers by the four pixels Pix included in the region of 2 pixels ×2 pixels, it is possible to obtain the region sum of the pixel values in the region, making it possible to calculate a region average based on the region sum. Alternatively, the region average can be calculated by image processing in the imaging processing section 112 or the signal processing section 122. Furthermore, by controlling a control signal output for each line from the vertical scanning section 1012 via the pixel signal line 1016 and scanning of each column by the horizontal scanning section 1015, it is possible to achieve thinning reading from each pixel Pix.

In a case where the medium-resolution image 30b and the low-resolution image 30c used in the moving object sensing mode and the human sensing mode are implemented by achieving the commonality of the floating diffusion layer in the imaging unit 111 or by performing reading control of the pixels Pix, it is possible to suppress power consumption related to reading of the pixels Pix and a load of AD conversion processing in the AD converter 1300, for example, leading to achievement of power saving. Furthermore, by using the medium-resolution image 30b or the low-resolution image 30c having a small number of processing units as compared with the high-resolution image 30a, as a processing target, it is possible for the sensing section 101 to save power for sensing processing.

Incidentally, the medium-resolution image 30b and the low-resolution image 30c can also be generated by image processing in the signal processing section 122 or the like, for example. In this case, since the reading processing of the pixels Pix in the imaging unit 111 is performed similarly to the case of the high-resolution image 30a, power saving in the imaging unit 111 cannot be expected. Still, it is possible to save power in the sensing section 101 even in this case.

### (Outline of color filter array)

Each pixel Pix can be provided with a filter that selectively transmits light in a predetermined wavelength band. When the wavelength band to be transmitted is a wavelength band in a visible light region, the filter is referred to as a color filter. Hereinafter, it is assumed that color filters of wavelength bands of red (R), green (G), and blue (B) constituting three primary colors are disposed for each pixel Pix. The filter is not limited thereto, and it is allowable to use a color filter of each color having a complementary color relationship with each pixel Pix, a filter that selectively transmits light in a wavelength band in an infrared region, or a filter that transmits light in a whole wavelength band in the visible light region. Hereinafter, unless otherwise specified, description will be given using color filters representing these various filters.

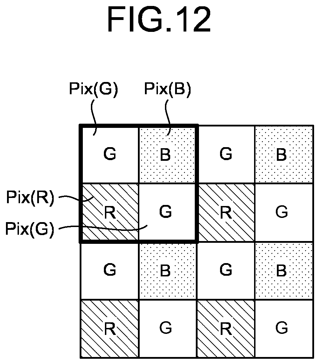

FIG. 12 is a schematic diagram illustrating an example of an ordinary Bayer array. In FIG. 12, the Bayer array includes two pixels Pix (G) with the G color filters, one pixel Pix (R) with the R color filter, and a pixel Pix (B) with the B color filter. In the Bayer array, these the four pixels are arranged in a lattice of 2 × 2 pixels such that the two pixels Pix (G) are not adjacent to each other. In other words, the Bayer array is an array in which pixels Pix with color filters that transmit light in the same wavelength band are not adjacent to each other.

Hereinafter, unless otherwise specified, the "pixel Pix (R) with the color filter of the R color" is referred to as a "pixel Pix (R) of the R color" or simply as a "pixel Pix (R)". The similar applies to the pixel Pix (G) with the G color filter and the pixel Pix (B) with the B color filter. Furthermore, in a case where the color filter is not particularly differentiated, each of the pixels Pix (R), Pix (G), and Pix (B) will be described as the pixel Pix, representatively.

### (3-3. Processing related to imaging control of first embodiment)

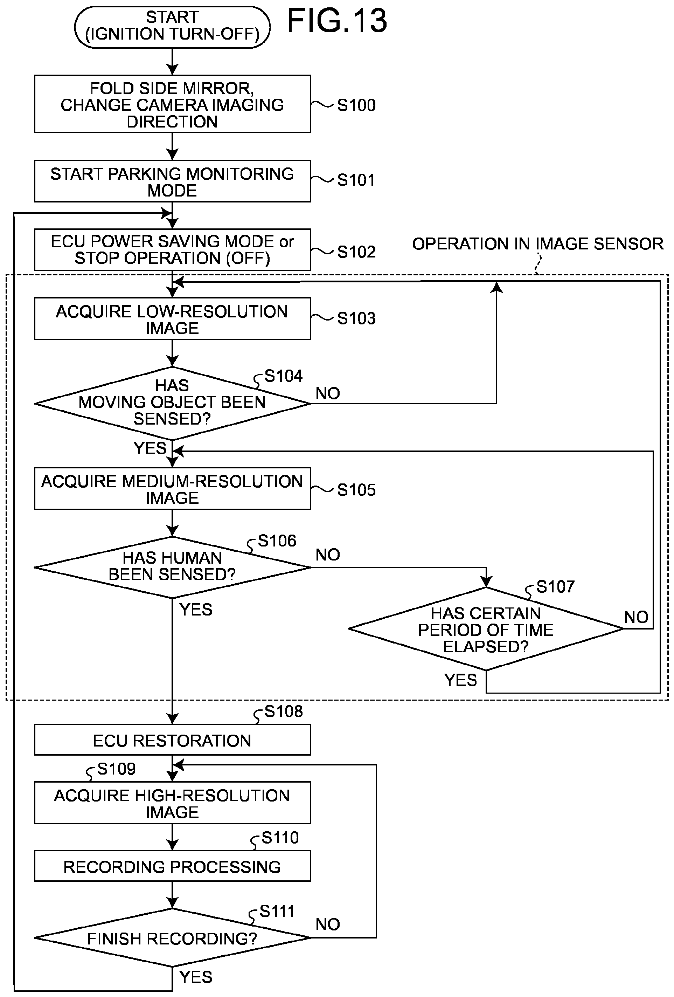

Next, processing related to imaging control of the first embodiment will be described in more detail. FIG. 13 is a flowchart illustrating an example of parking monitoring processing according to the first embodiment. The process according to the flowchart of FIG. 13 is started in the vehicle 10000 equipped with the in-vehicle monitoring apparatus 1 according to the first embodiment, for example, with determination of ignition turn-off as a trigger.

In the in-vehicle monitoring apparatus 1, at execution of control of the folding of the side mirror and the change of the imaging direction of the camera provided on the side mirror with the ignition turn-off (Step S100), the ECU 20 causes the control section 202 to start the parking monitoring mode as the operation mode of the in-vehicle monitoring apparatus 1 in the next Step S101. The details of processing of Step S100 will be described below. In the next Step S102, the ECU 20 causes the control section 202 to allow transition of the operation mode of the ECU 20 to the power saving mode or stop part of the functions of the ECU 20. At the same time, in Step S102, the ECU 20 causes the control section 202 to issue a trigger for starting sensing processing to the image sensor 10.

Hereinafter, the processing in Steps S103 to S107 is processing to be performed on the image sensor 10 side.

In Step S103, the image sensor 10 acquires the low-resolution image 30c by the imaging section 100. For example, in the image sensor 10, the sensing section 101 instructs the imaging section 100 to acquire the low-resolution image 30c. In response to this instruction, the imaging section 100 acquires the low-resolution image 30c by region averaging, thinning, or the like.

In the next Step S104, the sensing section 101 executes moving object sensing processing on the low-resolution image 30c acquired in Step S103. The sensing section 101 may execute the moving object sensing processing using the low-resolution image 30c acquired in the immediately preceding Step S103 and the low-resolution image 30c of one to several frames before the immediately preceding Step S103.

In a case where a moving object has not been sensed from the low-resolution image 30c in Step S104 (Step S104, "No"), the sensing section 101 returns the processing to Step S103 and acquires the low-resolution image 30c of the next frame. In contrast, in a case where a moving object has been sensed from the low-resolution image 30c in Step S104 (Step S104, "Yes"), the sensing section 101 proceeds to the processing of Step S105.

In Step S105, the image sensor 10 acquires the medium-resolution image 30b by the imaging section 100. For example, in the image sensor 10, the sensing section 101 instructs the imaging section 100 to acquire the medium-resolution image 30b. In response to this instruction, the imaging section 100 acquires the medium-resolution image 30b by region averaging, thinning, or the like.

In the next Step S106, the sensing section 101 executes human sensing processing on the medium-resolution image 30b acquired in Step S105. The sensing section 101 may execute the human sensing processing using the medium-resolution image 30b acquired in the immediately preceding Step S105 and the medium-resolution image 30b of one to several frames before the immediately preceding Step S105.

Note that the sensing target of the sensing section 101 in Step S106 is not limited to a human. For example, the sensing section 101 may use an object other than human as a sensing target as long as the object functions as a trigger for starting recording to be described below.

In a case where no human has been sensed from the medium-resolution image 30b in Step S106 (Step S106, "No"), the sensing section 101 proceeds to the processing of Step S107. In Step S107, the sensing section 101 determines whether a certain period of time has elapsed from the human sensing processing in Step S106. When having determined that the certain period of time has not elapsed (Step S107, "No"), the sensing section 101 returns to the processing of Step S105 to acquire the medium-resolution image 30b of the next frame. In contrast, when having determined that the certain period of time has elapsed (Step S107, "Yes"), the sensing section 101 returns to the processing of Step S103 and executes moving object sensing based on the low-resolution image 30c.

In a case where a human has been sensed from the medium-resolution image 30b in Step S106 (Step S106, "Yes"), the sensing section 101 proceeds to the processing of Step S108. In Step S108, the sensing section 101 restores the operation of the ECU 20. For example, the sensing section 101 issues an instruction to restore the operation of the ECU 20, and passes the instruction to the ECU 20. Upon receiving this instruction, the ECU 20 follows the received instruction and makes a transition of its own operation mode from the power saving mode or a mode that is partially inactive to a normal operation mode.

Thereafter, the processing in Steps S109 to S111 is processing performed on the ECU 20 side.

In Step S109, in the in-vehicle monitoring apparatus 1, the ECU 20 acquires the high-resolution image 30a by the imaging section 100. For example, in the in-vehicle monitoring apparatus 1, the ECU 20 instructs the image sensor 10 to acquire the high-resolution image 30a. In response to this instruction, the image sensor 10 acquires, from the imaging section 100, the high-resolution image 30a, which is not subjected to resolution reduction processing such as region averaging and thinning.

In the next Step S110, the ECU 20 executes recording processing in the determination section 201 and the control section 202 so as to record the high-resolution image 30a in a storage device 103. In the next Step S111, the determination section 201 in the ECU 20 determines whether to finish the recording of the high-resolution image 30a, for example.

When the determination section 201 has determined in Step S111 that the recording is not to be finished by a recording section 102 (Step S111, "No"), the ECU 20 returns to the processing of Step S109 and instructs the image sensor 10 to acquire the high-resolution image 30a of the next frame.

In contrast, when having determined that the recording has been finished in Step S111 (Step S111, "No"), the determination section 201 proceeds to the processing of Step S102, and allows the operation mode of the ECU 20 to transition to the power saving mode, or stops part of its own function.

As described above, the ECU 20 causes the control section 202 to issue a trigger for starting the sensing processing to the image sensor 10 in Step S102. In response to this trigger, the operation mode of the image sensor 10 transitions to the moving object sensing mode and the human sensing mode. Therefore, the ECU 20 functions as a control section that controls an imaging operation of the image sensor 10.

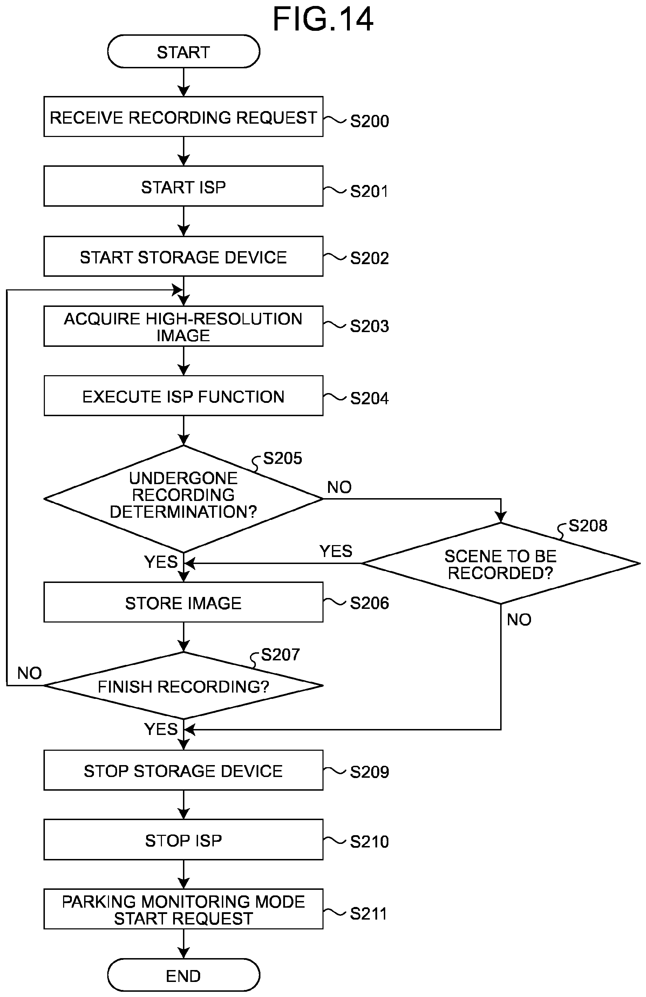

FIG. 14 is a flowchart of an example illustrating image data recording processing according to the first embodiment. The flowchart of FIG. 14 is a more detailed illustration of the processing of Steps S109 to S111 in the above-described flowchart of FIG. 13.

When the operation of the ECU 20 is restored in Step S108 in FIG. 14 described above, the ECU 20 uses the control section 202, for example, to receive a request for recording image data from the sensing section 101 in the image sensor 10 (Step S200). In the next Step S201, the control section 202 in the ECU 20 starts the ISP included in the ECU 20. In the next Step S202, the control section 202 in the ECU 20 starts a storage device for recording image data.

In the next Step S203, the control section 202 in the ECU 20 acquires the high-resolution image 30a from the image sensor 10. The processing of Step S203 corresponds to the processing of Step S109 in the flowchart of FIG. 14, for example.

In the next Step S204, the perception section 200 in the ECU 20 executes the ISP function, and executes image processing on the high-resolution image 30a acquired in Step S202. For example, the perception section 200 may cause the ISP to execute perception processing of perceiving a perception target on the high-resolution image 30a acquired as RAW data. In this case, the perception section 200 may recognize the human sensed in the processing of Step S106 according to the flowchart of FIG. 14 from the high-resolution image 30a as the perception target.

In Step S205, the determination section 201 of the ECU 20 determines whether the high-resolution image 30a acquired in Step S202 is an image that has undergone recording determination. For example, when a human is perceived by the perception processing in the ISP in Step S204, the determination section 201 may determine that the high-resolution image 30a is image data that has undergone recording determination as a recording target.

When the determination section 201 of the ECU 20 determines that the high-resolution image 30a as image data that has undergone recording determination (Step S205, "Yes"), the processing proceeds to Step S206. In Step S206, in the ECU 20, the control section 202 records the high-resolution image 30a in the storage device.

In the next Step S207, the determination section 201 in the ECU 20 determines whether to finish the recording of the high-resolution image 30a. When having determined not to finish the recording (Step S207, "No"), the determination section 201 returns to the processing of Step S203. In contrast, when the determination section 201 determines that the recording has been finished (Step S207, "Yes"), the processing proceeds to Step S209.

When the determination section 201 of the ECU 20 determines, in Step S205, that the high-resolution image 30a is not image data that has undergone recording determination (Step S205, "No"), the processing proceeds to Step S208. In Step S208, the determination section 201 determines whether the high-resolution image 30a is image data of a scene to be recorded.

For example, in the determination in Step S205, the determination section 201 may determine that the high-resolution images 30a up to a predetermined number of frames after the perception target is no longer perceived (determined not to be image data that has undergone recording determination) are image data of a scene to be recorded. That is, in the parking monitoring, it might be important to grasp the relationship before/after the frame in which the human or the object has been sensed. Therefore, it is preferable that image data after a human or an object once perceived is no longer perceived is also set as a recording target.

In a case where the determination section 201 of the ECU 20 determines in Step S208 that the high-resolution image 30a is image data of a scene to be recorded (Step S208, "Yes"), the processing proceeds to Step S206. In Step S206, in the ECU 20, the control section 202 records the high-resolution image 30a in the storage device. In contrast, when the determination section 201 determines in Step S208 that the high-resolution image 30a is not image data of a scene to be recorded (Step S208, "No"), the processing proceeds to Step S209.

In Step S209, the control section 202 in the ECU 20 stops the storage device for recording the image data. In the next Step S210, the control section 202 stops operation of the ISP.

In this manner, the in-vehicle monitoring apparatus 1 according to the first embodiment increases the resolution of image data to be processed stepwise in accordance with the sensing result for the image data. At the same time, the in-vehicle monitoring apparatus 1 executes moving object sensing and human sensing by minimum necessary processing blocks at each stage of the resolution of the image data, and finally records the high-resolution image 30a. In addition, the moving object sensing and the human sensing are executed by setting the ECU 20 at a subsequent stage of the image sensor 10 to a stop state or a power saving mode. This makes it possible for the in-vehicle monitoring apparatus 1 according to the first embodiment to monitor the surroundings of the vehicle at the time of parking with low power consumption, leading to achievement of continuous monitoring operation for a long time.

In addition, the in-vehicle monitoring apparatus 1 according to the first embodiment records only the image data by the high-resolution image 30a after the human sensing processing in the storage device, and does not record the medium-resolution image 30b or the low-resolution image 30c used in the moving object sensing mode or the human sensing mode. This makes it possible for the in-vehicle monitoring apparatus 1 according to the first embodiment to suppress consumption of the recording capacity of the storage device and record only necessary image data, leading also to suppression of time and effort to confirm recorded image data.

### (3-4. Side mirror camera control according to first embodiment)

Next, control of the cameras mounted on the side mirrors 60L and 60R (refer to FIG. 4) according to the first embodiment will be described.

Since the side mirrors 60L and 60R have no difference except for the right and left sides, the side mirrors 60L and 60R will be described below as the side mirror 60R representatively unless otherwise specified. When there is no need to distinguish the side mirrors 60L and 60R, the side mirrors 60L and 60R may be collectively referred to as a side mirror 60.

### (3-4-1. Configuration according to known technology)

First, in order to facilitate understanding, attachment of a camera to the side mirror 60 according to a known technology will be schematically described. As described with reference to FIG. 4, for example, the side mirror 60R is equipped with a camera (referred to as a side mirror camera) for imaging the sensing region 10103R covering the vicinity of the right side surface of the vehicle 10000. The side mirror camera is attached to the side mirror 60R so as to image the sensing region 10103R when the side mirror 60R is unfolded. Therefore, when the side mirror 60R is folded, the imaging direction changes, leading to difficulty in imaging the sensing region 10103R in some cases.

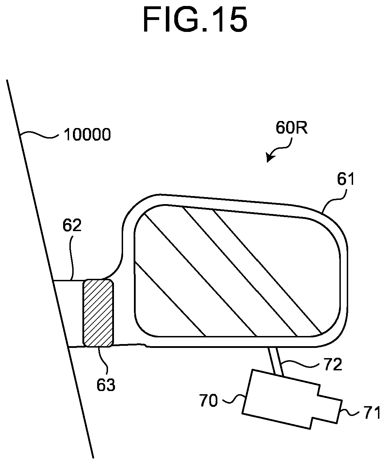

FIG. 15 is a schematic diagram schematically illustrating a side mirror camera according to a known technology. In FIG. 15, the side mirror 60R includes a mirror portion 61 and an arm portion 62, and is fixed to the side surface of the vehicle 10000 by the arm portion 62. The side mirror 60R can be folded such that the mirror surface faces the side surface of the vehicle 10000 by a shaft 63 provided in the arm portion 62. The state where the side mirror 60R is folded is referred to as a folded state, and a state of being open as illustrated in the drawing is referred to as an unfolded state.

The side mirror camera 70 is fixedly attached to the side mirror 60R by a camera fixing tool 72. In this example, the side mirror camera 70 is attached to the side mirror 60R such that a lens portion 71 faces slightly downward, for example. The side mirror camera 70 is an example of the camera 10051 described with reference to FIGS. 3 and 4.

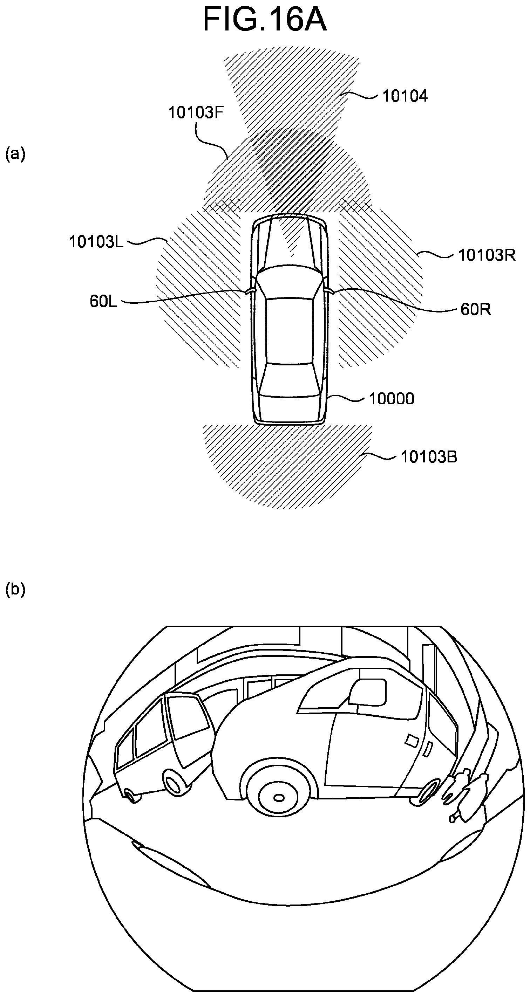

FIG. 16A is a schematic diagram illustrating an example of an imaging range and a captured image of the side mirror camera 70 when the side mirror 60R is unfolded according to the known technology. As illustrated in section (a) of FIG. 16A, when the side mirror 60R is unfolded, an imaging range (sensing region 10103R) by the side mirror camera 70 provided on the side mirror 60R covers the vicinity of the right side surface of the vehicle 10000.

Section (b) in FIG. 16A illustrates an example of a captured image obtained by the side mirror camera 70 mounted on the side mirror 60R when the side mirror 60R is unfolded. In the drawing, the left side is the direction of the head of the vehicle 10000. In the side mirror camera 70, the lens portion 71 is often implemented by using a fisheye lens or an ultrawide-angle lens so as to be able to obtain a wide angle of view. In the example of the drawing, a fisheye lens is used as the lens portion 71.

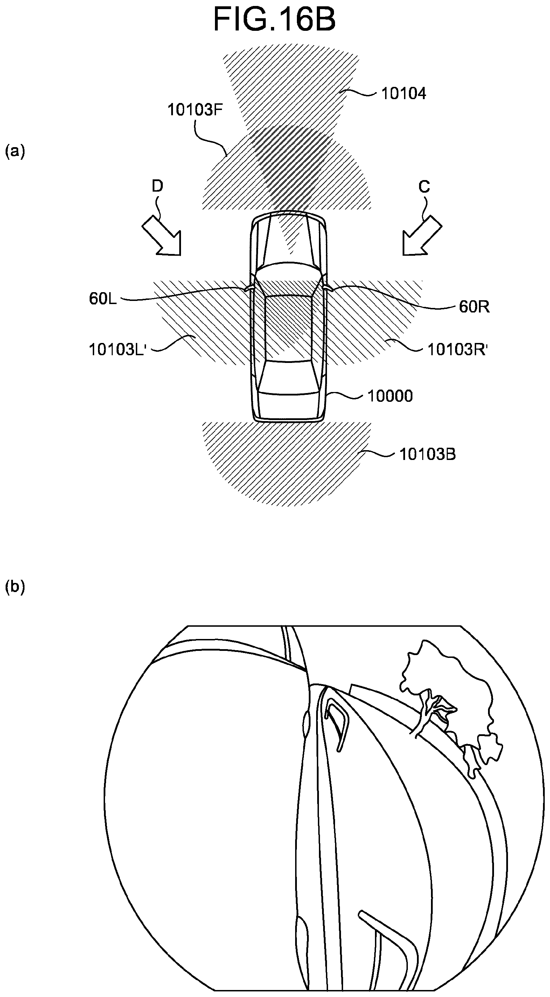

FIG. 16B is a schematic diagram illustrating an example of an imaging range and a captured image of the side mirror camera 70 when the side mirror 60R is in the folded state according to the known technology. As illustrated in section (a) of FIG. 16B, when the side mirror 60R is folded, the imaging direction of the side mirror camera 70 mounted on the side mirror 60R is to be directed to the rear of the vehicle 10000 according to the state of the side mirror 60R. As a result, an imaging range (sensing region 10103R') obtained by the side mirror camera 70 covers only the rear right side surface of the vehicle 10000, leaving a blind spot on the front right side of the vehicle 10000 as indicated by arrow C in the figure.

Similarly, regarding the left side of the vehicle 10000, when the side mirror 60L is folded, the imaging direction of the side mirror camera 70 mounted on the side mirror 60L faces the rear of the vehicle 10000. As a result, an imaging range (sensing region 10103L') obtained by the side mirror camera 70 covers only the rear left side of the vehicle 10000, leaving a blind spot on the front left side of the vehicle 10000 as indicated by arrow D in the figure.

Section (b) in FIG. 16B illustrates an example of a captured image obtained by the side mirror camera 70 mounted on the side mirror 60R when the side mirror 60R is folded. Since the side mirror camera 70 faces the rear of the vehicle 10000, the left half of the captured image is the image of the vehicle 10000, the right half is the image of the rear right side of the vehicle 10000, and the captured image does not include the image of the front of the vehicle 10000. In this manner, when the side mirror 60R is folded, it can be seen that the front of the vehicle 10000 is a blind spot.

### (3-4-2. Side mirror camera control according to first embodiment)

Next, control of the side mirror camera 70 according to the first embodiment will be described.

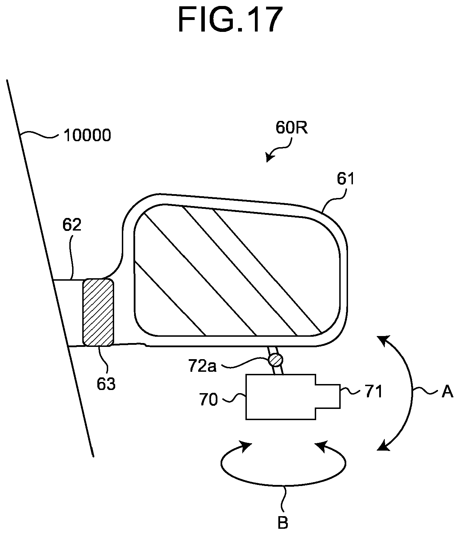

FIG. 17 is a schematic view schematically illustrating the side mirror camera 70 according to the first embodiment. In FIG. 17, the side mirror camera 70 is attached to the side mirror 60R by a camera fixing tool 72a. In the first embodiment, the camera fixing tool 72a can control the orientation of the side mirror camera 70 by, for example, two rotation axes. In the example of FIG. 17, the camera fixing tool 72a can control the orientation of the side mirror camera 70 in a predetermined angle range individually in the vertical direction and the horizontal direction as indicated by arrows A and B, respectively in the drawing.

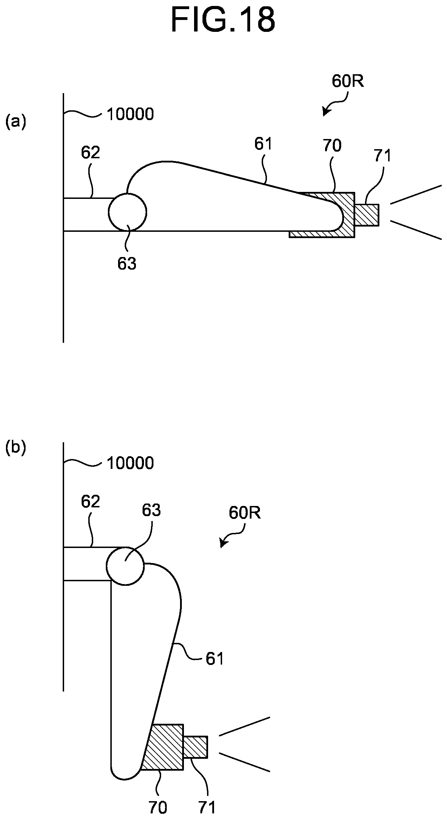

FIG. 18 is a schematic diagram for illustrating control of an imaging direction of the side mirror camera 70 according to the first embodiment. In FIG. 18, section (a) illustrates a state when the side mirror 60R is unfolded. The orientation of the side mirror camera 70, in the unfolded state, is controlled by the camera fixing tool 72a such that the imaging direction (the direction of the lens portion 71) is set in the opposite direction with respect to the vehicle 10000. Therefore, the imaging range of the side mirror camera 70 can cover the sensing region 10103R (not illustrated) on the right side of the vehicle 10000.

In FIG. 18, section (b) illustrates a state when the side mirror 60R is folded. When folded, the side mirror 60R is folded with its mirror surface facing the vehicle 10000 by the shaft 63. In the first embodiment, also in this case, the orientation of the side mirror camera 70 is controlled by the camera fixing tool 72a such that the imaging direction is directed in the opposite direction to the vehicle 10000. In other words, when the side mirror 60R is folded, the camera fixing tool 72a controls the orientation of the side mirror camera 70 such that the imaging direction, that is, the direction of the lens portion 71 maintains the direction of the side mirror 60R in the unfolded state.

Therefore, even when the side mirror 60R is folded, the imaging range of the side mirror camera 70 can cover the sensing region 10103R (not illustrated) on the right side surface of the vehicle 10000. This makes it possible to suppress the occurrence of a blind spot in the known technology described with reference to FIG. 16B.

In the first embodiment, in order to direct (fix or change) the imaging range of the side mirror camera 70 mounted on the side mirror 60 in an arbitrary three-dimensional direction within a predetermined angle range, a motor or a drive component having a function similar to the motor is incorporated in the camera fixing tool 72a being a tool for fixing the side mirror camera 70 to the side mirror 60. The drive component is driven in accordance with the orientation of the side mirror 60. More specifically, when the angle of the side mirror 60 with respect to the vehicle 10000 is changed, the drive component is controlled based on a control signal that offsets the movement of the side mirror camera 70 due to the angle change.

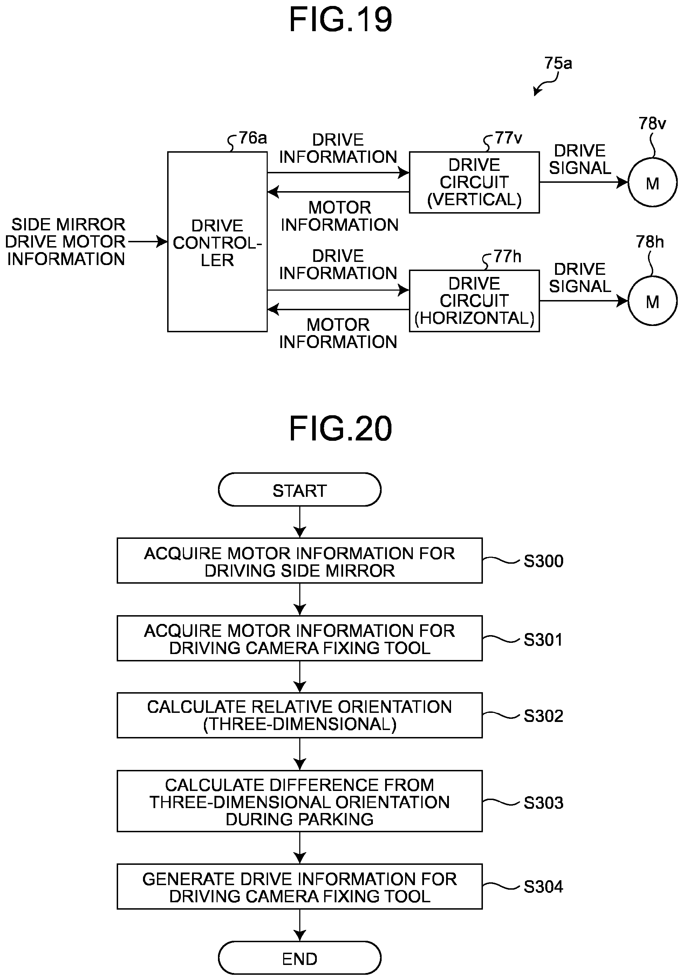

FIG. 19 is a block diagram illustrating a configuration of an example of the camera fixing tool driver that drives a camera fixing tool 72a according to the first embodiment. In FIG. 19, a camera fixing tool driver 75a includes a drive controller 76a, drive circuits 77v and 77h, and motors 78v and 78h. Among these, the drive controller 76a is included in the ECU 20. The configuration is not limited thereto, and the drive circuits 77v and 77h may be further included in the ECU 20.

The drive circuits 77v and 77h generate drive signals for driving the camera fixing tool 72a in the vertical direction and the horizontal direction within a predetermined angle range in accordance with drive information supplied from the drive controller 76a. The drive circuit 77v drives the motor 78v by the generated drive signal. The motor 78v drives the camera fixing tool 72a in the vertical direction. This changes the orientation of the side mirror camera 70 in the vertical direction. Similarly, the drive circuit 77h drives the motor 78h by the generated drive signal. The motor 78h drives the camera fixing tool 72a in the horizontal direction. This changes the orientation of the side mirror camera 70 in the horizontal direction. By combining the movements of the motors 78v and 78h, the orientation of the side mirror camera 70, that is, the imaging range of the side mirror camera 70, can be set in any direction within a predetermined angle range.

The drive circuits 77v and 77h output information regarding the driving of the motors 78v and 78h, respectively, as motor information. The motor information includes, for example, information indicating a rotation angle of the motor.

The drive controller 76a acquires side mirror drive motor information, being information for driving the side mirror 60R to the unfolded state and the folded state, from the vehicle control system 10011 via the communication network 10041, for example. Furthermore, the drive controller 76a acquires the motor information output from the drive circuits 77v and 77h. Based on the side mirror drive motor information and the motor information output from the drive circuits 77v and 77h, the drive controller 76a generates drive information for each of the drive circuits 77v and 77h for maintaining the imaging direction of the side mirror camera 70 to be the imaging direction when the side mirror 60 is in the unfolded state.

In this manner, the ECU 20, being a component including the drive controller 76a, functions as a control section that controls the imaging direction of the side mirror camera 70.

FIG. 20 is a flowchart illustrating an example of control of an imaging direction of the side mirror camera 70 according to the first embodiment.

In Step S300, the drive controller 76a acquires motor information regarding each motor that drives the side mirror 60. Here, the drive controller 76a acquires at least motor information regarding a motor that performs folding/unfolding driving of the side mirror 60. The drive controller 76a may further acquire motor information regarding a motor that drives the mirror surface of the side mirror 60.

In the next Step S301, the drive controller 76a acquires motor information regarding the motors 78v and 78h that drive the camera fixing tool 72a on the side mirror 60.

In next Step S302, using each piece of motor information acquired in Step S300 and each piece of motor information acquired in Step S301, the drive controller 76a calculates the three-dimensional relative orientation of the side mirror camera 70 with respect to the vehicle body of the vehicle 10000. That is, in Step S302, the drive controller 76a calculates the current orientation information of the side mirror camera 70.

Note that the orientation information of the side mirror camera 70 may include three-dimensional rotation information (roll, pitch, and yaw) of the side mirror camera 70 and azimuth information including height information of the side mirror camera 70. That is, the orientation information of the side mirror camera 70 can be considered to be information indicating the imaging direction of the side mirror camera 70.

In the next Step S303, the drive controller 76a calculates a difference between preset three-dimensional orientation information regarding the side mirror camera 70 at the time of parking (for example, when the side mirror 60 is folded) and the current three-dimensional orientation information calculated in Step S302.

In the next Step S304, the drive controller 76a generates drive information for driving the camera fixing tool 72a based on the difference in orientation information calculated in Step S303. More specifically, the drive controller 76a generates individual drive information for driving the motors 78v and 78h so that the difference approaches 0.

The drive controller 76a supplies the generated drive information individually to the drive circuits 77v and 77h. The drive circuits 77v and 77h individually generate drive signals based on the supplied drive information, and drive the motors 78v and 78h, respectively.

By controlling the orientation of the side mirror camera 70 as described above, it is possible to suppress dependence of the imaging range and the imaging direction of the side mirror camera 70 on the state of the side mirror 60. Therefore, according to the orientation control of the side mirror camera 70 of the first embodiment, it is possible to greatly suppress the occurrence of a blind spot when the side mirror 60 is folded, described in the known technology.

### (3-5. First modification of first embodiment)

Next, a first modification of the first embodiment will be described. The first modification of the first embodiment is an example in which the vehicle 10000 and the side mirror camera 70 include an Inertial Measurement Unit (IMU), and an image shooting range and an image shooting direction of the side mirror camera 70 are controlled using outputs of these IMUs.

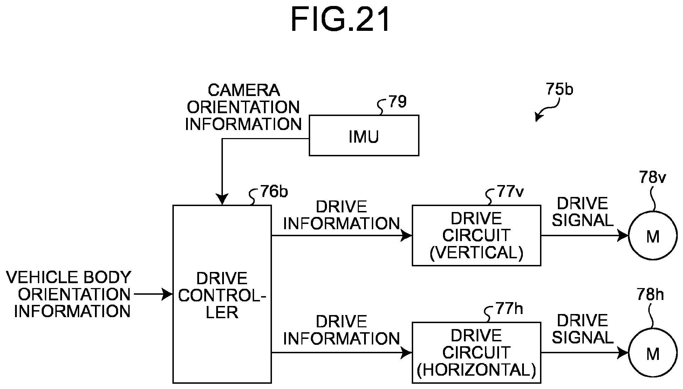

FIG. 21 is a block diagram illustrating a configuration of an example of a camera fixing tool driver that drives the camera fixing tool 72a according to a first modification of the first embodiment. In FIG. 21, a camera fixing tool driver 75b includes a drive controller 76b, drive circuits 77v and 77h, and motors 78v and 78h. Among these, the drive controller 76b is included in the ECU 20. The configuration is not limited thereto, and the drive circuits 77v and 77h may be further included in the ECU 20.

Since the drive circuits 77v and 77h and the motors 78v and 78h are equivalent to the drive circuits 77v and 77h and the motors 78v and 78h described with reference to FIG. 19, the description thereof is omitted here.

The drive controller 76b obtains camera orientation information indicating the orientation of the side mirror camera 70 output from an IMU 79 included in the side mirror camera 70. Not limited thereto, the IMU 79 may be provided near the position for mounting the side mirror camera 70 of the camera fixing tool 72a. The drive controller 76b further acquires, via the communication network 10041, vehicle body orientation information indicating the orientation of the vehicle body of the vehicle 10000 output from the IMU included in the vehicle sensor 10027.

Based on the camera orientation information and the vehicle body orientation information, the drive controller 76a generates drive information for each of the drive circuits 77v and 77h for maintaining the imaging direction of the side mirror camera 70 to be the imaging direction when the side mirror 60 is in the unfolded state. Based on the drive information generated by the drive controller 76b, the drive circuits 77v and 77h generate drive signals for driving the motors 78v and 78h, respectively.

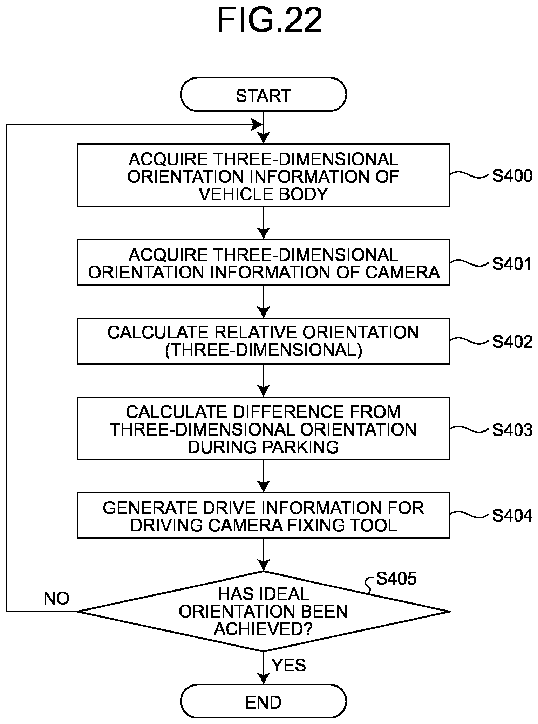

FIG. 22 is a flowchart of an example illustrating control of an imaging direction of a side mirror camera according to the first modification of the first embodiment.

In Step S400, the drive controller 76b acquires three-dimensional orientation information (vehicle body orientation information) of the vehicle body from the IMU included in the vehicle sensor 10027. In the next Step S401, the drive controller 76b acquires three-dimensional orientation information (camera orientation information) of the side mirror camera 70 output from the IMU 79.

In the next Step S402, using the vehicle body orientation information acquired in Step S400 and the camera orientation information acquired in Step S401, the drive controller 76b calculates the three-dimensional relative orientation of the side mirror camera 70 with respect to the vehicle body of the vehicle 10000. That is, in Step S402, the drive controller 76b calculates the current orientation information of the side mirror camera 70.

In the next Step S403, the drive controller 76b calculates a difference between preset three-dimensional orientation information regarding the side mirror camera 70 at the time of parking (for example, when the side mirror 60 is folded) and the current three-dimensional orientation information calculated in Step S402.

In the next Step S404, the drive controller 76b generates drive information for driving the camera fixing tool 72a based on the difference in orientation information calculated in Step S403. More specifically, the drive controller 76b generates individual drive information for driving the motors 78v and 78h so that the difference approaches 0.

The drive controller 76b supplies the generated drive information individually to the drive circuits 77v and 77h. The drive circuits 77v and 77h individually generate drive signals based on the supplied drive information, and drive the motors 78v and 78h, respectively.

In next Step S405, the drive controller 76b determines whether the orientation of the side mirror camera 70 has achieved ideal orientation. For example, when the difference calculated in Step S403 falls within a predetermined range including 0, the drive controller 76b may determine that the orientation of the side mirror camera 70 has achieved ideal orientation. Not limited to this, the drive controller 76b may execute the processing in Steps S400 to S403 described above again in Step S405, and determine whether the orientation of the side mirror camera 70 has achieved the ideal orientation based on the difference calculated in Step S403.

When having determined that the orientation of the side mirror camera 70 has not achieved the ideal orientation (Step S405, "No"), the drive controller 76b returns to the processing of Step S400. In contrast, when having determined that the orientation of the side mirror camera 70 has achieved the ideal orientation (Step S405, "Yes"), the drive controller 76b finishes a series of processing of the flowchart in FIG. 22.

By controlling the orientation of the side mirror camera 70 as described above, it is possible to suppress dependence of the imaging range and the imaging direction of the side mirror camera 70 on the state of the side mirror 60. Therefore, according to the orientation control of the side mirror camera 70 in the first modification of the first embodiment, it is possible to greatly suppress the occurrence of a blind spot when the side mirror 60 is folded, described in the known technology.

Here, the orientation of the side mirror camera 70 is controlled using the output of the IMU included in the vehicle sensor 10027 of the vehicle 10000 and the output of the IMU 79 included in the side mirror camera 70, but the configuration is not limited to this example.

For example, there may be a case where the IMU 79 is installed near the side mirror camera 70 or the position for attaching the side mirror camera 70 of the camera fixing tool 72a, and the vehicle 10000 is not provided with the IMU, or may be a case where the drive controller 76b cannot use the output of the IMU provided in the vehicle 10000.

In this case, the orientation information of the vehicle 10000 can be estimated based on the orientation information of the side mirror camera 70 acquired by the IMU 79 and the state of the motor that drives the side mirror 60 to the unfolded state and the folded state. Drive controller 76b obtains a three-dimensional relative orientation of the side mirror camera 70 with respect to the vehicle 10000 based on the orientation information of the vehicle 10000 estimated in this manner and the orientation information of the side mirror camera 70. The drive controller 76b executes the processing of Step S403 and subsequent steps in the flowchart of FIG. 22 using the relative orientation obtained in this manner.

Further, image transformation may be performed on image data captured by the side mirror camera 70 in consideration of the three-dimensional orientation of the side mirror 60. In this case, it is allowable to omit the above-described driving of the motors 78v and 78h, and hold three-dimensional orientation information of the side mirror camera 70 in the folded/unfolded states in order to adjust the imaging range when the side mirror 60 is folded.

There can be another case where the side mirror 60 is not in the folded state during parking. In this case, the orientation of the side mirror camera 70 may be changed to orientation set in advance for parking monitoring.

Furthermore, in general, the imaging direction of the side mirror camera 70 when the side mirror 60 is unfolded is a direction toward the ground for the monitoring of the vicinity of the wheel or the like. This makes it difficult to monitor a wide range around the vehicle 10000 in the imaging range when the side mirror 60 is unfolded. According to the first embodiment and the first modification of the first embodiment, it is possible to enhance the admissibility of evidence of the recorded image by changing the imaging direction of the side mirror camera 70 (for example, changing the imaging direction to the horizontal direction) when the side mirror 60 is folded.

### (3-6. Second modification of first embodiment)

Next, a second modification of the first embodiment will be described. In the first embodiment, the imaging section 100 of the image sensor 10 is implemented by adopting a sensor that receives light in a visible light wavelength region using a color filter that transmits light in a wavelength region of each of RGB colors. In contrast, in the second modification of the first embodiment, the imaging section 100 is implemented by adopting a sensor capable of receiving light in an infrared wavelength region (infrared (IR) light) in addition to light in a visible light wavelength region.

In a case where parking monitoring is performed, it is desired to perform monitoring for 24 hours a day. However, in a case of adopting a sensor that receives light in a visible light wavelength region, monitoring performance, nighttime performance in particular, depends on sensor sensitivity, having a limit in monitoring accuracy. The second modification of the first embodiment aims to improve nighttime performance by using a sensor capable of receiving IR light.

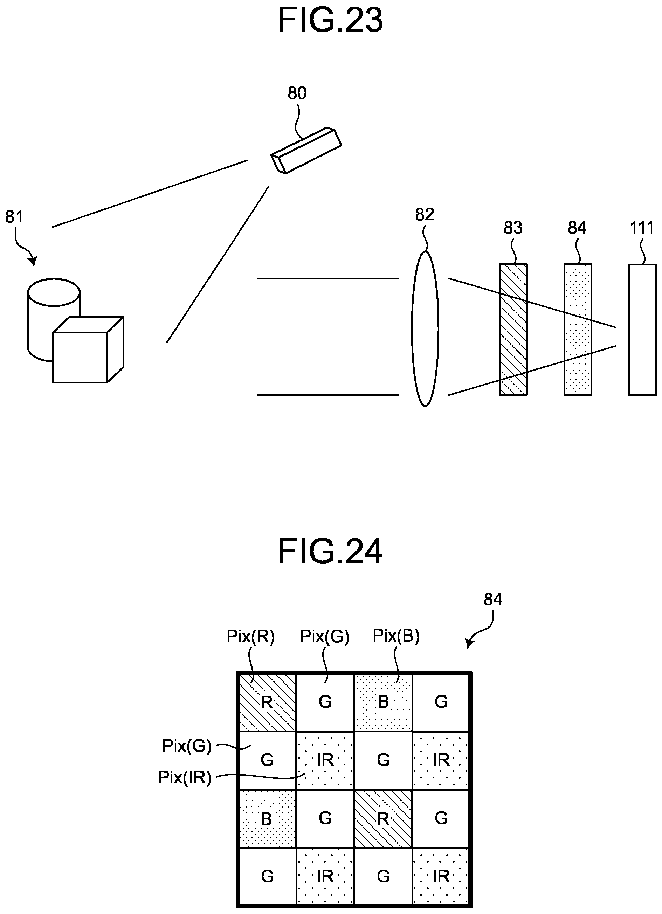

FIG. 23 is a schematic diagram illustrating a principle of a sensing method using IR light according to a second modification of the first embodiment.

In FIG. 23, a subject 81 is irradiated with light using a light source 80 capable of emitting light including IR light. Reflected light, being light reflected from the subject 81, is emitted to the imaging unit 111 via a lens 82, a dual-bandpass filter 83, and a color filter portion 84. The color filter portion 84 includes: color filters that are arranged in units of pixels Pix and transmit light of individual visible light wavelength regions of R color, G color, and B color; and an IR filter that transmits light of an IR wavelength region.

FIG. 24 is a schematic diagram illustrating an example of an array (referred to as an RGBIR array) of each color filter including an IR filter in the color filter portion 84. In this example, 16 pixels of 4 pixels ×4 pixels are set as a unit of the array. Two pixels Pix (R) and two pixels Pix (B), eight pixels Pix (G), and four pixels Pix (IR) each having an IR filter are included in the array, with the pixels Pix arranged so as not to allow the pixels Pix having filters that transmit light in the same wavelength band to be adjacent to each other.

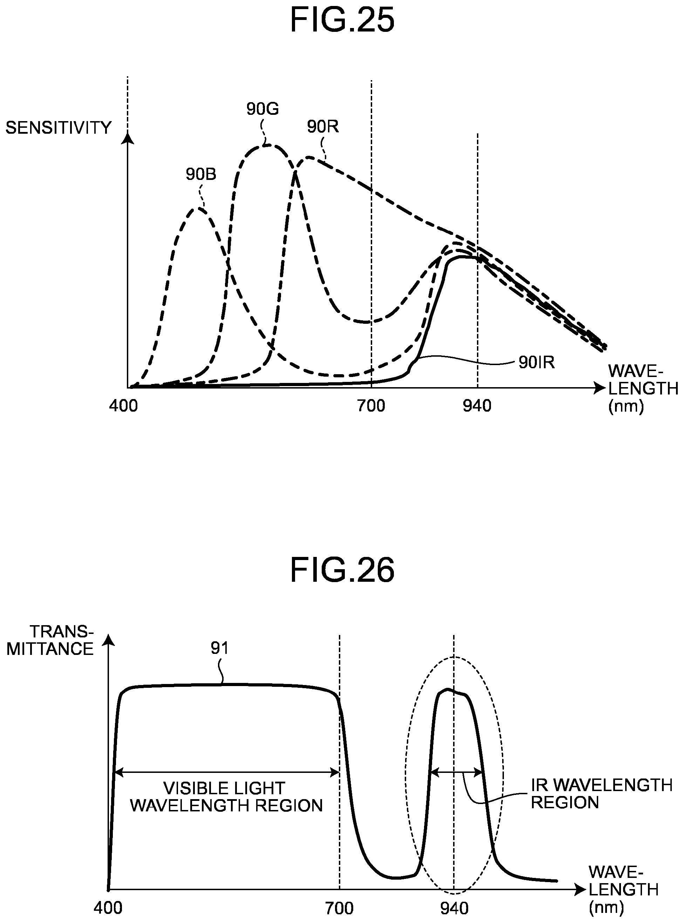

FIG. 25 is a schematic diagram illustrating an example of spectral characteristics of a sensor including: each color filter that transmits light in each wavelength region of each color of RGB; and an IR filter that transmits light in an IR wavelength region. Characteristic lines 90R, 90G, and 90B indicate an example of characteristics in the individual color filters that transmit light in the visible light wavelength regions of the R color, the G color, and the B color, respectively; the characteristic line 90IR indicates an example of a characteristic in the IR filter that transmits light in the IR wavelength region. According to FIG. 25, the wavelength region of 400 nm to 700 nm is the visible light wavelength region, and the wavelength region near 940 nm is the IR light wavelength region.

FIG. 26 is a schematic diagram illustrating an example of spectral characteristics of the dual-bandpass filter 83. As illustrated as a characteristic line 91 in FIG. 26, the dual-bandpass filter 83 has a characteristic of selectively transmitting light in the visible light wavelength region of a wavelength of 400 nm to 700 nm and light in a wavelength region in the vicinity of a wavelength of 940 nm.

By using a sensor capable of receiving IR light, which includes the color filter portion 84 of the RGBIR array illustrated in FIG. 24, as the camera 10051 in the external recognition sensor 10025 and projecting IR light at night, it is possible to improve the accuracy of parking monitoring at night. Regarding the sensing function in the sensing section 101, in a case of performing human sensing using a machine learning model, for example, learning is to be performed also on IR light environment so as to handle the case. In addition, in a case where a drive recorder is used, it is conceivable that IR light cannot be received due to the influence of glass when the drive recorder is mounted in the vehicle. However, this is not going to a problem with a vehicle exterior camera.

### (3-7. Third modification of first embodiment)

Next, a third modification of the first embodiment will be described. In the first embodiment described above, the imaging section 100 and the sensing section 101 are integrally formed in one chip. In contrast, in the third modification of the first embodiment, the imaging section 100 and the sensing section 101 are formed as separate chips.

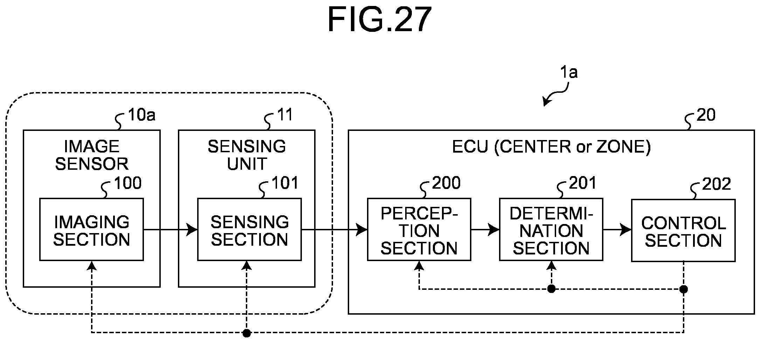

FIG. 27 is a block diagram illustrating a configuration of an example of an in-vehicle monitoring apparatus 1a according to the third modification of the first embodiment. In FIG. 27, the imaging section 100 is included in an image sensor 10a as one chip, and the sensing section 101 is included in a sensing unit 11 as one chip. Similarly to the in-vehicle monitoring apparatus 1 described with reference to FIG. 5, the ECU 20 includes the perception section 200, the determination section 201, and the control section 202.

In the in-vehicle monitoring apparatus 1a, the image sensor 10a outputs the low-resolution image 30c in the moving object sensing mode, and outputs the medium-resolution image 30b in the human sensing mode. Furthermore, the image sensor 10a outputs the high-resolution image 30a in the recording mode.

Also with the configuration of the in-vehicle monitoring apparatus 1a according to the third modification of the first embodiment, similarly to the configuration according to the first embodiment, it is possible, in the moving object sensing mode and the human sensing mode, to reduce the load of the reading processing from each pixel Pix in the imaging section 100 and the sensing processing by the sensing section 101, and possible to allow the ECU 20 to operate in the low power consumption mode, leading to achievement of power saving.

### (3-8. Fourth modification of first embodiment)

Next, a fourth modification of the first embodiment will be described. In the first embodiment described above, the imaging section 100 and the sensing section 101 are integrally formed in one chip, and the perception section 200, the determination section 201, and the control section 202 are formed in the ECU 20. In contrast, in the fourth modification of the first embodiment, the sensing section 101 is provided on the ECU 20 side.

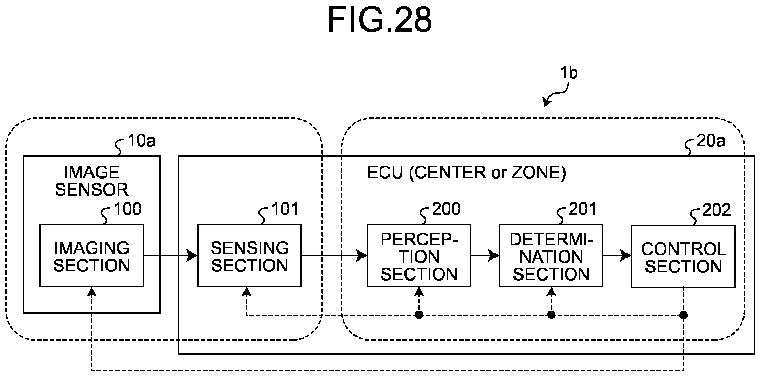

FIG. 28 is a block diagram illustrating a configuration of an example of an in-vehicle monitoring apparatus 1b according to the fourth modification of the first embodiment. In FIG. 28, an ECU 20a includes the sensing section 101, the perception section 200, the determination section 201, and the control section 202, while an image sensor 10a includes only the imaging section 100.

In the in-vehicle monitoring apparatus 1a, the image sensor 10a outputs the low-resolution image 30c in the moving object sensing mode, and outputs the medium-resolution image 30b in the human sensing mode. Furthermore, the image sensor 10a outputs the high-resolution image 30a in the recording mode. In addition, the ECU 20a causes the perception section 200, the determination section 201, and the control section 202 to operate in the low power consumption mode at the time of execution of sensing processing by the sensing section 101.

Also with the configuration of the in-vehicle monitoring apparatus 1b according to the fourth modification of the first embodiment, similarly to the configuration according to the first embodiment, it is possible, in the moving object sensing mode and the human sensing mode, to reduce the load of the reading processing from each pixel Pix in the imaging section 100 and the sensing processing by the sensing section 101, and possible to allow the perception section 200, the determination section 201, and the control section 202 in the ECU 20a to operate in the low power consumption mode, leading to achievement of power saving.

### (4. Second embodiment of present disclosure)

Next, a second embodiment of the present disclosure will be described. A second embodiment of the present disclosure is an example similar to the first embodiment described above except that object tracking is performed by changing the imaging direction of one or more cameras 10051 of the front, rear, left, and right cameras 10051 in accordance with a sensing result of moving object sensing or human sensing.

Here, it is assumed that each of the front, rear, left, and right cameras 10051 is fixed to the vehicle body of the vehicle 10000 by the camera fixing tool 72a described with reference to FIGS. 18 and 19 in the first embodiment, and the imaging direction is changeable within a predetermined angle range in the vertical direction and the horizontal direction according to an instruction from the ECU 20.

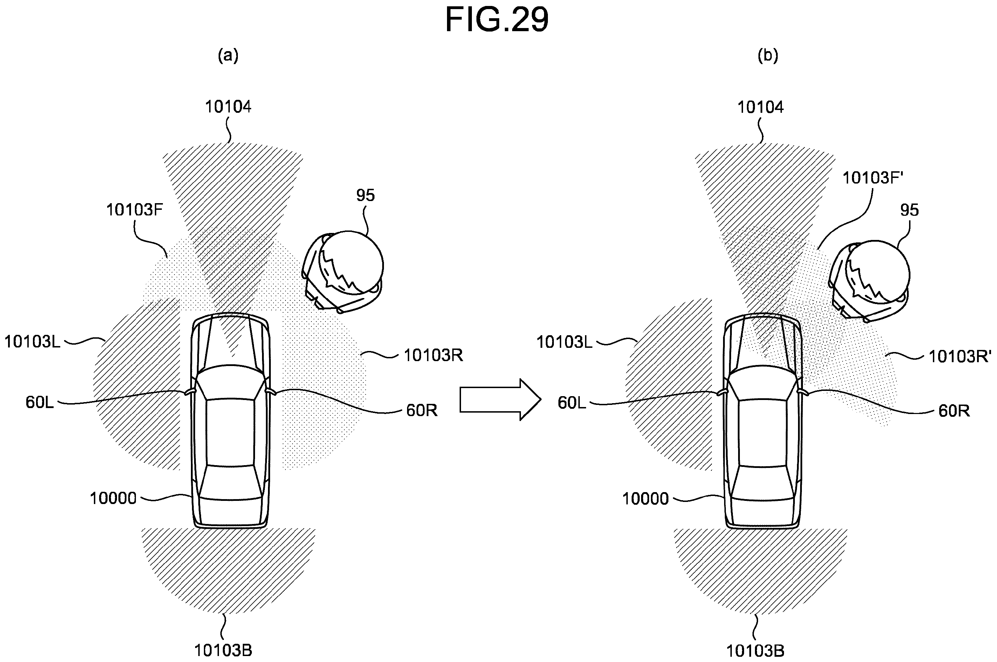

FIG. 29 is a schematic diagram for illustrating control of an imaging direction according to a second embodiment. As illustrated in section (a) of FIG. 29, here is an assumable case where a target object 95 is sensed at the left end of the sensing region 10103R by the right camera and the right end of the sensing region 10103F by the front camera. In this case, the target object 95 is out of view at each position of: the left end of the image data captured in the sensing region 10103R; and the right end of the image data captured in the sensing region 10103F. Furthermore, in a case where a camera using a fisheye lens is applied to the front camera and the right camera, the distortion of the image increases at the end of the captured image data. Therefore, these pieces of image data may have low validity as evidence.

Therefore, in the second embodiment, as illustrated in section (b) of FIG. 29, imaging directions of the front camera and the right camera including the target object 95 in the captured image are set toward the target object 95. This allows the target object 95 to be positioned at the center of each of a sensing region 10103F' of the front camera and a sensing region 10103R' of the right camera, leading to enhancement of the admissibility of evidence as compared with the case of the section (a) in FIG. 29.

For example, in the in-vehicle monitoring apparatus according to the second embodiment, when the operation transitions to the recording mode in accordance with the human sensing result in the sensing section 101, the perception section 200 of the ECU 20 obtains the position of the target object 95 in the image based on the high-resolution image 30a. In the ECU 20, based on the obtained position of the target object 95 in the image, for example, the control section 202 generates drive information for driving the motors 78v and 78h that control the imaging direction of the camera 10051 that enables the position to be included in the central portion of the imaging range, among the cameras 10051. The drive circuits 77v and 77h drive the motors 78v and 78h in accordance with the drive information generated by the control section 202. This makes it possible to set the imaging directions of the front camera and the right camera to be directed toward the target object 95, achieving tracking of the target object 95.

The ECU 20 preferably sets the resolution of the image data captured by the front camera and the right camera in a case where the imaging directions of the front camera and the right camera are set to be in the direction of the target object 95 such that the resolution will be higher than the resolution before the imaging direction is set in the direction of the target object 95.

Note that, in the above description, the imaging directions of the front camera and the right camera are changed with respect to the target object 95, but the configuration is not limited to this example. For example, it is also allowable to provide a mechanism of changing the imaging direction only in the right camera and the left camera. In a case where an event is sensed based on image data captured by the front camera and the rear camera, the imaging direction of the right camera and the left camera may be changed to cover blind spots of other cameras such as the front camera and the rear camera.

Furthermore, in a case where the vehicle 10000 is equipped with a camera capable of changing the imaging direction in accordance with control in addition to the front, rear, left, and right cameras 10051 (surround view cameras), the imaging direction of the camera may be set in the direction of the target object 95 when the target object 95 is sensed.

In this manner, with the in-vehicle monitoring apparatus according to the second embodiment, even when the target object 95 is out of view in the imaging range of the front, rear, left, and right cameras 10051 provided in the vehicle 10000, the target object 95 can be included in the central portion of the imaging range by changing the imaging direction of the camera 10051 in which the target object 95 is out of view. This makes it possible to perform perception processing for the target object 95 with high accuracy, leading to enhancement of the admissibility of evidence of the image data.

### (5. Third embodiment of present disclosure)

A third embodiment of the present disclosure will be described. A third embodiment of the present disclosure is an example similar to the second embodiment described above except that object tracking is performed by changing the imaging direction of an in-vehicle camera, being the camera provided inside the vehicle, in accordance with a sensing result of moving object sensing or human sensing.

The in-vehicle camera is an example of the in-vehicle sensor 10026 illustrated in FIG. 3, and is supposed to be fixed to the inside of the vehicle 10000 (in the cabin, for example in the middle of the upper end of the windshield) by a mechanism equivalent to the camera fixing tool 72a described with reference to FIGS. 18 and 19 in the first embodiment, and the imaging direction is supposed to be changeable within a predetermined angle range in the vertical direction and the horizontal direction according to an instruction from the ECU 20.

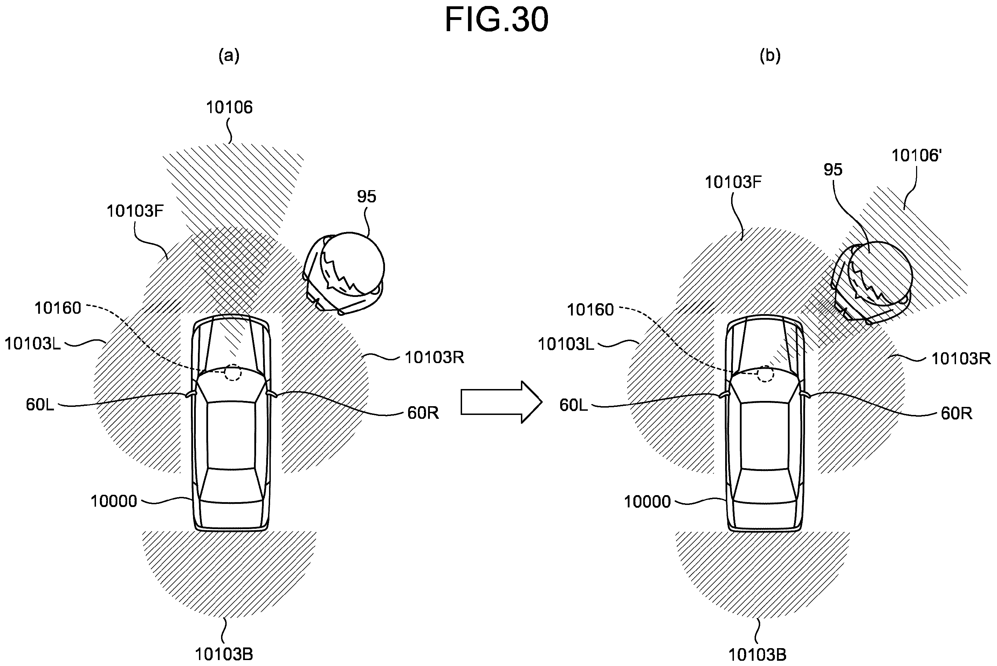

FIG. 30 is a schematic diagram for illustrating control of an imaging direction according to a third embodiment. In sections (a) and (b) of FIG. 30, a sensing region 10106 corresponds to an imaging range of an in-vehicle camera 10160.

Similarly to the section (a) of FIG. 29 described above, the section (a) of FIG. 30 illustrates a state in which the target object 95 is sensed in the end of the sensing region 10103R by the right camera and the sensing region 10103F by the front camera, and is imaged in the end of each piece of image data captured in each of the sensing regions 10103R and 10103F.

In the third embodiment, in such a case, the imaging direction of the in-vehicle camera 10160 is set in the direction of the target object 95 as illustrated in section (b) of FIG. 30. As a result, the target object 95 is positioned in the central portion of a sensing region 10106' by the in-vehicle camera 10160, leading to enhancement of the admissibility of evidence as compared with the case of the section (a) in FIG. 30.

For example, in the in-vehicle monitoring apparatus according to the third embodiment, when the operation transitions to the recording mode in accordance with the human sensing result in the sensing section 101, the perception section 200 of the ECU 20 obtains the position of the target object 95 in the image based on the high-resolution image 30a. In the ECU 20, based on the obtained position of the target object 95 in the image, the control section 202 generates drive information for driving a motor that controls the imaging direction of the in-vehicle camera 10160. The drive circuit that drives the motor drives the motor according to the drive information generated by the control section 202. This makes it possible to set the imaging direction of the in-vehicle camera 10160 to be directed toward the target object 95, achieving tracking of the target object 95.

In this manner, according to the in-vehicle monitoring apparatus according to the third embodiment, even when the target object 95 is included in the imaging range of the front, rear, left, and right cameras 10051 provided in the vehicle 10000, it is possible to perform imaging with the target object 95 included in the central portion of the imaging range by changing the imaging direction of the in-vehicle camera 10160. This makes it possible to perform perception processing for the target object 95 with high accuracy, leading to enhancement of the admissibility of evidence of the image data.

Furthermore, each camera provided as a surround view camera on the front, rear, left, and right of the vehicle body of the vehicle 10000 often uses an ultrawide-angle lens or a fisheye lens in order to reliably obtain a wide sensing region. In contrast, the in-vehicle camera 10160 typically uses a lens having a standard angle of view. Therefore, by controlling the imaging direction of the in-vehicle camera 10160 and tracking the target object 95, the target object 95 can be perceived with higher accuracy, leading to achievement of high admissibility of evidence of the captured image data.

### (6. Other embodiments of present disclosure)

Although the above has described cases where the in-vehicle monitoring apparatus according to each embodiment and modification of the present disclosure senses a human based on image data captured by the imaging section 100, but the configuration is not limited to this example. For example, the in-vehicle monitoring apparatus according to each embodiment and modification of the present disclosure is not limited to a human, and may sense an object that can harm the vehicle 10000. Examples of objects that may harm the vehicle 10000 include other vehicles and bicycles. A human may be included as an example of the object. Also in this case, the in-vehicle monitoring apparatus may start recording the captured image data in the storage device in accordance with the sensing of the object.

Furthermore, as another embodiment, in conjunction with sensing by one camera, another camera other than the camera used for the sensing may be controlled to transition to the imaging state with high resolution.

Furthermore, the in-vehicle monitoring apparatus according to each of the disclosed embodiments and modifications may be applied in order to implement keyless start of the vehicle 10000 by a Driver Monitoring System (DMS) or the like. In this case, the in-vehicle monitoring apparatus can save power as a whole by reducing power consumption stepwise in each processing of face detection, face recognition, and personal authentication.

### (7. Effects of embodiments and modifications of present disclosure)

According to each embodiment and modification of the present disclosure, it is possible to implement an in-vehicle parking monitoring system covering 360° around the vehicle 10000 as a monitoring range with low power consumption, achieving parking monitoring for a long time.

In a case where the side mirror camera 70 according to each embodiment and each modification of the present disclosure is mounted on the electrically-foldable side mirror 60, an imaging direction by the side mirror camera 70 can be changed between during driving (in the unfolded state) and during parking (in the folded state), making it possible to reduce blind spots of the side mirror camera 70. In addition, since the imaging direction of the side mirror camera 70 is typically directed toward the ground, it is possible to enhance the admissibility of evidence of the recorded image by three-dimensionally changing the imaging direction (orientation) of the side mirror camera 70 during parking.

In addition, by applying a filter of an RGBIR array to the imaging section 100 and projecting IR light, it is possible to implement in-vehicle parking monitoring with high nighttime performance, leading to achievement of 24 hour monitoring including nighttime.

Furthermore, according to each embodiment and modification of the present disclosure, it is possible to use a surround view camera mounted on the vehicle 10000, eliminating the necessity to perform parking monitoring using an add-on drive recorder, making it also possible to avoid impairment of the design of the vehicle 10000.

Furthermore, in accordance with each embodiment and each modification of the present disclosure, moving object sensing and human sensing are performed based on captured image data, and high-resolution image data is recorded in the storage device in accordance with the result. This makes it possible to reduce overstraining on the recording capacity of the storage device and time and effort of confirming the recorded moving image by the user. In addition, it is possible to suppress generation of unnecessary recording and restrict data output to the outside of the sensor, leading to enhancement of privacy protection and security.

The effects described in the present specification are merely examples, and thus, there may be other effects, not limited to the exemplified effects.

Note that the present technology can also have the following configurations.
(1) An in-vehicle monitoring apparatus comprising:
   an imaging section provided in a vehicle including a side mirror housing and configured to generate image data in accordance with imaging; and
   a control section configured to control an imaging operation and an imaging direction of the imaging section,
   wherein the control section
   controls the imaging direction of the imaging section in accordance with a state of the side mirror housing, and
   sets the imaging operation of the imaging section to a first power consumption mode in accordance with an ignition turn-off determination of the vehicle, and
   the imaging section
   operates such that, when a motion of a surrounding object has been detected based on first image data generated in the first power consumption mode, the imaging operation is to be set to a second power consumption mode, the second power consumption mode taking higher power consumption than the first power consumption mode.
(2) The in-vehicle monitoring apparatus according to the above (1),
   wherein the second power consumption mode is a mode of generating second image data having a resolution lower than a maximum resolution of the image data generated by the imaging section, and the first power consumption mode is a mode of generating the first image data having a resolution lower than the resolution of the second image data.
(3) The in-vehicle monitoring apparatus according to the above (1) or (2),
   wherein the control section
   sets the imaging operation of the imaging section to a third power consumption mode having higher power consumption than the second power consumption mode in a case where an object having a possibility of harming a human or the vehicle has been detected based on a second image data generated in the second power consumption mode by the imaging section.
(4) The in-vehicle monitoring apparatus according to the above (3),
   wherein the third power consumption mode is a mode of generating third image data having a resolution higher than the resolution of the second image data generated in the second power consumption mode.
(5) The in-vehicle monitoring apparatus according to the above (4),
   wherein the control section
   records the third image data in a recording section.
(6) The in-vehicle monitoring apparatus according to any one of the above (1) to (5),
   wherein the control section
   controls the imaging direction of the imaging section so as to maintain an imaging direction when the side mirror housing is unfolded, in accordance with the state of the side mirror housing.
(7) The in-vehicle monitoring apparatus according to the above (6),
   wherein the control section
   controls the imaging direction of the imaging section such that the imaging direction when the side mirror housing is unfolded is to be maintained when the side mirror housing is folded.
(8) The in-vehicle monitoring apparatus according to the above (6) or (7),
   wherein the control section
   controls the imaging direction of the imaging section based on drive information for driving the side mirror housing and drive information for changing the imaging direction of the imaging section with respect to the side mirror housing.
(9) The in-vehicle monitoring apparatus according to the above (6) or (7),
   wherein the control section
   controls the imaging direction of the imaging section based on orientation information indicating orientation of the vehicle and orientation information indicating orientation of the imaging section.
(10) The in-vehicle monitoring apparatus according to any one of the above (1) to (9),
   wherein the control section
   in a case where a target object has been detected based on image data generated by the imaging section, acquires image data captured in a direction of the target object.
(11) The in-vehicle monitoring apparatus according to the above (10),
   wherein the control section
   changes the imaging direction, being a direction of imaging performed by the imaging section, to the direction of the target object.
(12) The in-vehicle monitoring apparatus according to the above (10),
   wherein the control section
   changes an imaging direction, being a direction of imaging performed by an in-vehicle camera provided inside the vehicle, to the direction of the target object.
(13) The in-vehicle monitoring apparatus according to any one of the above (10) to (12),
   wherein the control section
   when the target object has been detected based on the first image data, the first image data being generated in the first power consumption mode by the imaging section, acquires image data captured in the direction of the target object and having a resolution higher than the resolution of the first image data.
(14) The in-vehicle monitoring apparatus according to any one of the above (1) to (13),
   wherein the imaging section and the control section are integrally formed.
(15) The in-vehicle monitoring apparatus according to any one of the above (1) to (13),
   wherein the imaging section and the control section are separately formed.
(16) The in-vehicle monitoring apparatus according to the above (15),
   wherein the control section is included in a configuration of a processing section that executes processing in a subsequent stage.
(17) The in-vehicle monitoring apparatus according to any one of the above (1) to (16),
   wherein the imaging section includes:
   a first camera and a second camera, provided in the side mirror housing of the vehicle; a third camera and a fourth camera, provided in front of and behind the vehicle, and an in-vehicle camera provided in the vehicle.
(18) An information processing apparatus comprising
   a control section configured to control an imaging operation and an imaging direction of an imaging section, the imaging section being provided in a vehicle including a side mirror housing and configured to generate image data in accordance with imaging,
   wherein the control section
   controls the imaging direction of the imaging section in accordance with a state of the side mirror housing,
   sets the imaging operation of the imaging section to a first power consumption mode in accordance with an ignition turn-off determination of the vehicle, and
   sets, when a motion of a surrounding object has been detected based on first image data generated in the first power consumption mode by the imaging section, the imaging operation of the imaging section to a second power consumption mode, the second power consumption mode taking higher power consumption than the first power consumption mode.
(19) An in-vehicle monitoring system comprising:
   an imaging apparatus provided in a vehicle including a side mirror housing and configured to generate image data in accordance with imaging; and
   a control apparatus configured to communicate with the imaging apparatus and control an imaging operation and an imaging direction of the imaging apparatus,
   wherein the control apparatus
   controls the imaging direction of the imaging apparatus in accordance with a state of the side mirror housing, and
   sets the imaging operation of the imaging apparatus to a first power consumption mode in accordance with an ignition turn-off determination of the vehicle, and
   the imaging apparatus
   operates such that, when a motion of a surrounding object has been detected based on first image data generated in the first power consumption mode, the imaging operation is to be set to a second power consumption mode, the second power consumption mode taking higher power consumption than the first power consumption mode.

### Reference Signs List

1, 1a, 1b IN-VEHICLE MONITORING APPARATUS
10, 10a, 3100 IMAGE SENSOR
11 SENSING UNIT
20, 20a, 3200 ECU
30a HIGH-RESOLUTION IMAGE
30b, 30b_{det2} MEDIUM-RESOLUTION IMAGE
30c, 30c_{det1} LOW-RESOLUTION IMAGE
60, 60L, 60R SIDE MIRROR
61 MIRROR PORTION
62 ARM PORTION
63 SHAFT
70 SIDE MIRROR CAMERA
71 LENS PORTION
72, 72a CAMERA FIXING TOOL
75a, 75b CAMERA FIXING TOOL DRIVER
76a, 76b DRIVE CONTROLLER
77v, 77h DRIVE CIRCUIT
78v, 78h MOTOR
84 COLOR FILTER PORTION
100 IMAGING SECTION
101 SENSING SECTION
110 IMAGING BLOCK
111 IMAGING UNIT
112 IMAGING PROCESSING SECTION
120 SIGNAL PROCESSING BLOCK
121 SENSOR CONTROLLER
122 SIGNAL PROCESSING SECTION
200 PERCEPTION SECTION
201 DETERMINATION SECTION
202 CONTROL SECTION
10000 VEHICLE
10011 VEHICLE CONTROL SYSTEM
10026 IN-VEHICLE SENSOR
10027 VEHICLE SENSOR
10051 CAMERA

## Claims

1. An in-vehicle monitoring apparatus comprising:
an imaging section provided in a vehicle including a side mirror housing and configured to generate image data in accordance with imaging; and
a control section configured to control an imaging operation and an imaging direction of the imaging section,
wherein the control section
controls the imaging direction of the imaging section in accordance with a state of the side mirror housing, and
sets the imaging operation of the imaging section to a first power consumption mode in accordance with an ignition turn-off determination of the vehicle, and
the imaging section
operates such that, when a motion of a surrounding object has been detected based on first image data generated in the first power consumption mode, the imaging operation is to be set to a second power consumption mode, the second power consumption mode taking higher power consumption than the first power consumption mode.

2. The in-vehicle monitoring apparatus according to claim 1,
wherein the second power consumption mode is a mode of generating second image data having a resolution lower than a maximum resolution of the image data generated by the imaging section, and the first power consumption mode is a mode of generating the first image data having a resolution lower than the resolution of the second image data.

3. The in-vehicle monitoring apparatus according to claim 1,
wherein the control section
sets the imaging operation of the imaging section to a third power consumption mode having higher power consumption than the second power consumption mode in a case where an object having a possibility of harming a human or the vehicle has been detected based on a second image data generated in the second power consumption mode by the imaging section.

4. The in-vehicle monitoring apparatus according to claim 3,
wherein the third power consumption mode is a mode of generating third image data having a resolution higher than the resolution of the second image data generated in the second power consumption mode.

5. The in-vehicle monitoring apparatus according to claim 4,
wherein the control section
records the third image data in a recording section.

6. The in-vehicle monitoring apparatus according to claim 1,
wherein the control section
controls the imaging direction of the imaging section so as to maintain an imaging direction when the side mirror housing is unfolded, in accordance with the state of the side mirror housing.

7. The in-vehicle monitoring apparatus according to claim 6,
wherein the control section
controls the imaging direction of the imaging section such that the imaging direction when the side mirror housing is unfolded is to be maintained when the side mirror housing is folded.

8. The in-vehicle monitoring apparatus according to claim 6,
wherein the control section
controls the imaging direction of the imaging section based on drive information for driving the side mirror housing and drive information for changing the imaging direction of the imaging section with respect to the side mirror housing.

9. The in-vehicle monitoring apparatus according to claim 6,
wherein the control section
controls the imaging direction of the imaging section based on orientation information indicating orientation of the vehicle and orientation information indicating orientation of the imaging section.

10. The in-vehicle monitoring apparatus according to claim 1,
wherein the control section
in a case where a target object has been detected based on image data generated by the imaging section, acquires image data captured in a direction of the target object.

11. The in-vehicle monitoring apparatus according to claim 10,
wherein the control section
changes the imaging direction, being a direction of imaging performed by the imaging section, to the direction of the target object.

12. The in-vehicle monitoring apparatus according to claim 10,
wherein the control section
changes an imaging direction, being a direction of imaging performed by an in-vehicle camera provided inside the vehicle, to the direction of the target object.

13. The in-vehicle monitoring apparatus according to claim 10,
wherein the control section
when the target object has been detected based on the first image data, the first image data being generated in the first power consumption mode by the imaging section, acquires image data captured in the direction of the target object and having a resolution higher than the resolution of the first image data.

14. The in-vehicle monitoring apparatus according to claim 1,
wherein the imaging section and the control section are integrally formed.

15. The in-vehicle monitoring apparatus according to claim 1,
wherein the imaging section and the control section are separately formed.

16. The in-vehicle monitoring apparatus according to claim 15,
wherein the control section is included in a configuration of a processing section that executes processing in a subsequent stage.

17. The in-vehicle monitoring apparatus according to claim 1,
wherein the imaging section includes:
a first camera and a second camera, provided in the side mirror housing of the vehicle; a third camera and a fourth camera, provided in front of and behind the vehicle, and an in-vehicle camera provided in the vehicle.

18. An information processing apparatus comprising
a control section configured to control an imaging operation and an imaging direction of an imaging section, the imaging section being provided in a vehicle including a side mirror housing and configured to generate image data in accordance with imaging,
wherein the control section
controls the imaging direction of the imaging section in accordance with a state of the side mirror housing,
sets the imaging operation of the imaging section to a first power consumption mode in accordance with an ignition turn-off determination of the vehicle, and
sets, when a motion of a surrounding object has been detected based on first image data generated in the first power consumption mode by the imaging section, the imaging operation of the imaging section to a second power consumption mode, the second power consumption mode taking higher power consumption than the first power consumption mode.

19. An in-vehicle monitoring system comprising:
an imaging apparatus provided in a vehicle including a side mirror housing and configured to generate image data in accordance with imaging; and
a control apparatus configured to communicate with the imaging apparatus and control an imaging operation and an imaging direction of the imaging apparatus,
wherein the control apparatus
controls the imaging direction of the imaging apparatus in accordance with a state of the side mirror housing, and
sets the imaging operation of the imaging apparatus to a first power consumption mode in accordance with an ignition turn-off determination of the vehicle, and
the imaging apparatus
operates such that, when a motion of a surrounding object has been detected based on first image data generated in the first power consumption mode, the imaging operation is to be set to a second power consumption mode, the second power consumption mode taking higher power consumption than the first power consumption mode.
